(19) Europäisches Patentamt

European Patent Office

Office européen des brevets

(11) **EP 1 285 309 B1**

(12) **EUROPEAN PATENT SPECIFICATION**

(45) Date of publication and mention
of the grant of the patent:
**19.07.2006 Bulletin 2006/29**

(51) Int Cl.:
***G02F 1/31*** (2006.01)

(21) Application number: **01957799.8**

(22) Date of filing: **18.05.2001**

(86) International application number:
**PCT/EP2001/005699**

(87) International publication number:
**WO 2001/090811 (29.11.2001 Gazette 2001/48)**

(54) **CDZNTE ELECTRO-OPTICAL SWITCH**

CDZNTE ELEKTROOPTISCHER SCHALTER

COMMUTATEUR ELECTRO-OPTIQUE CDZNTE

(84) Designated Contracting States:
**AT BE CH CY DE DK ES FI FR GB GR IE IT LI LU MC NL PT SE TR**

(30) Priority: **26.05.2000 EP 00111379**
**02.06.2000 US 208559 P**

(43) Date of publication of application:
**26.02.2003 Bulletin 2003/09**

(73) Proprietor: **Pirelli & C. S.p.A.**
**20123 Milano (IT)**

(72) Inventors:
• **BOFFI, Pierpaolo**
**I-27058 Voghera (IT)**
• **MARTINELLI, Mario**
**I-20097 San Donato Milanese (IT)**
• **MILANI, Antonella**
**I-21100 Varese (IT)**
• **ZAPPETTINI, Andrea**
**I-42100 Reggio Emilia (IT)**

(74) Representative: **Battipede, Francesco**
**Pirelli S.p.A.,**
**Industrial Property Department,**
**Viale Sarca 222**
**20126 Milano (IT)**

(56) References cited:
**US-A- 5 090 824**

• **TRIVEDI S B ET AL: "OPTOELECTRONIC MATERIAL CD1-X ZNX TE: GROWTH CHARACTERIZATION AND APPLICATIONS" PROCEEDINGS OF THE SPIE, 1989, XP000900976 cited in the application**
• **KANG H S ET AL: "GENERATION OF THZ BEAMS IN CDXZN1-X TE CRYSTALS" BALTIMORE, MD, MAY 23 - 28, 1999,NEW YORK, NY: IEEE,US, September 1999 (1999-09), pages 1107-1108, XP000937610 ISBN: 0-7803-5658-6**
• **ZAPPETTINI A ET AL: "Optically induced switching in CdZnTe" TECHNICAL DIGEST. SUMMARIES OF PAPERS PRESENTED AT THE CONFERENCE ON LASERS AND ELECTRO-OPTICS. POSTCONFERENCE EDITION. CLEO '99. CONFERENCE ON LASERS AND ELECTRO-OPTICS (IEEE CAT. NO.99CH37013), TECHNICAL DIGEST. SUMMARIES OF PAPERS PRESENTED AT THE, pages 283-284, XP000922994 1999, Washington, DC, USA, Opt. Soc. America, USA ISBN: 1-55752-595-1 cited in the application**
• **KUTSAENKO V V ET AL: "Dispersion of electrooptic constants of bismuth silicate" FIZIKA TVERDOGO TELA, JUNE 1986, USSR, vol. 28, no. 6, pages 1778-1782, XP000953103 ISSN: 0367-3294**

**EP 1 285 309 B1**

**Description**

**BACKGROUND OF THE INVENTION**

The present invention relates generally to the field of transmission and control of optical signals. More particularly, the present invention relates to an electrical controlled optical switch, wherein the switch utilizes a $Cd_x Zn_{1-x}Te$ crystal to enhance the electro-optical performance.

Some compounds of a crystalline nature can be used in certain conditions to cause the polarization plane of the transmitted light to rotate. Examples of compounds of this type are CdTe:ln, GaAs, and $Bi_{12}SiO_{20}$. When subjected to an electric field the indices of refraction of the crystals vary according to variations in the strength of the field. The polarization components of a light beam propagating in such crystals have different phase velocities, and thus produce a phase shift, the entity of the phase shift depending on the strength and orientation of the applied field. The aforementioned effect is commonly called the "electro-optical effect." Among materials showing the electro-optical effect are the cubic crystals of the 4 3$m$ symmetry group. Examples of members of this group are: InAs, CuCl, GaAs and CdTe. Amnon Yariv, *Introduction to Optical Electronics,* Appendix A, pp. 334-337 (ed. Holt, Rinehart and Winston, Inc, 1971), discusses the electro-optical effect for this symmetry group.

A known crystal class belonging to the 43$m$ group are zinc-blend structures, e.g. GaAs, CdTe:ln. M.L. Laasch et al., "Growth of twin-free CdTe single crystals in a semi-closed vapor phase system," *Journal of Crystal Growth,* Vol. 174, pp. 696-707 (1997) describes a modified Markov method for growing single crystals of CdTe. According to the article, vanadium and Ga-doped CdTe single crystals with one inch diameter may be grown without wall contact in a semi-closed vapor phase system. The absence of wall contact improves the crystal perfection.

The electro-optic coefficient is a characteristic parameter of each electro-optic material that connects the applied electric field to the variation of birefringence induced by that electric field. S. Namba, "Electro-Optical Effect of Zincblende", *Journal of the Optical Society of America,* Vol. 51, No.1, pp. 76-79 (Jan. 1961), reports measures of the electro-optic coefficient $r_{41}$ for zinc-blend at various wavelengths between 404 and 644 $\mu$m. Table 1 of the article depicts the electro-optical properties of a ZnS crystal.

The quality of an electro-optic material is also characterized by means of the figure of merit. For a zinc-blend structure, the figure of merit is equal to the product of the electro-optic factor $r_{41}$ and the third power of the refraction index no, namely $r_{41}n_0{}^3$. In addition, a half-voltage $V_\pi$ may be applied to an electro-optic crystal to cause a birefringence that results in a shift in the phases of the polarization components passing through the crystal of a quantity $\pi$. For a zinc-blend structure this voltage is:

$$V_\pi = \frac{\lambda}{2} \frac{1}{r_{41}n^3{}_0} \frac{d}{L} \qquad (1)$$

where $\lambda$ is the wavelength of the entering light beam, $r_{41}n_0{}^3$ is the figure of merit, L is the length of the crystal, and d is the distance between the electrodes of voltage application, e.g. the crystal thickness.

The ternary crystal CdZnTe is an alloy of the binary compounds CdTe and ZnTe. CdZnTe is a semiconductor belonging to group IIB-VIA and has a zinc-blend structure. Such a structure comprises two different atomic species, each species located on the lattice points of a face-centered cubic cell. The two cells are separated by one-fourth of the length of a body diagonal of the cubic unit cell. The CdZnTe crystal has been employed as an x-ray and $\gamma$-ray detector.

Sudhir B. Trivedi et al., "Optoelectronic Material $Cd_{1-x} Zn_xTe$: Growth Characterization and Applications", *SPIE, "Optoelectronic Materials, Devices, Packaging, and Interconnects II",* Vol. 994, pp.154-159 (1988) discusses a Bridgeman technique for growing $Cd_{1-x}Zn_xTe$ crystals, where x and 1-x represent the molar fraction of that element. In particular, this article deals with the growth of $Cd_{1-x}Zn_xTe$ having x=0.04. The article describes using a particular growth technique to produce good crystals of $Cd_{1-x} Zn_xTe$ having improved characteristics as compared to CdTe. According to the article, the $Cd_{1-x} Zn_xTe$ crystals may be used as infrared electro-optic modulators, infrared laser windows, x-ray and $\gamma$-ray detectors, solar energy converters, and gun diode oscillators.

An electro-optic material may also exhibit the so-called "photoconductive effect", that is the generation of free electric charge carriers when an optical beam of suitable wavelength is applied to the crystal. The optical beam applied to a zone of a crystal excites charge carriers in the conduction band from the impurity levels. If an external electric field is simultaneously applied to the crystal, the photogenerated charge carriers migrate into and become trapped in an adjacent dark region of the crystal not illuminated by the optical beam. The resulting spatial-charge density associated with the trapped charge carriers creates an opposite electric field to the one applied, i.e., a counter-field. At suitable intensities of the incident optical beam the counter-field balances the applied electric field and thus inhibits the electro-optic effect while creating the so-called "auto-inhibition effect", which is also referred to as "shielding effect" or "space-charge effect".

The "bandedge" is the transition region of a particular material's absorption spectrum that divides the spectral region of high absorption from the spectral region of low absorption. In the portion of the low absorption region near the bandedge the absorption factor is not negligible while in the portion far from the bandedge the absorption factor is considerably lower.

The Applicant observes that according to the common knowledge in the field the space-charge effect is related to light absorption. In particular the greater the light absorption coefficient, the greater the space charge effect.

For example I.P. Kaminow in "Measurements of the Electrooptic Effect in CdS, ZnTe, and GaAs at 10.6 Microns", *IEEE Journal of Quantum Electronics,* pp. 23-26 (Jan. 1968) reports experimental data of materials that are suitable for modulating $CO_2$ lasers at 10.6 microns. In particular, the author performed experiments on CdS and on materials belonging to the zinc-blend class, i.e., ZnTe, and GaAs in order to measure their electro-optic coefficients.

The author observed for the CdS crystal at a wavelength equal to 0.633 $\mu$m, i.e. near the bandedge, a drop of the electro-optic coefficient for modulating frequency comprised between 1 kHz and 20 Hz.

The author also observed that for the CdS crystal at 10.6 $\mu$m, very far from the bandedge, no carriers were generated and the space-charge effects were absent.

For GaAs and ZnTe crystals the author observed the same electro-optic coefficient behavior found for CdS crystal.

The author concluded that the space-charge effects, due to the motion of light generated charge carriers, limit the use of such materials at low modulation frequencies and at wavelengths near the bandedge.

Optical switches are important devices in optical communication systems, i.e., systems used to transmit optical signals through optical fibers. The term "switch" is hereinafter taken to mean a device capable of creating, changing, or breaking optical paths that connect N input ports to M output ports. A switch may be used to route an optical beam entering an input port to a predetermined output port or to interrupt the optical connection between input and output ports. The term "electro-optical switch" is hereinafter taken to mean a switch in which an external electric voltage induces an electro-optic effect for the purpose of routing the optical beam from an input port to a predetermined output port or interrupting an optical connection between optical ports.

William H. Steier et al., "infrared Power Limiting and Self-switching in CdTe", *Applied Physics Letters,* Vol. 53 (10), pp. 840-841 (1988) describes a power limiter and a "self-switch" that uses the shielding effect of the electric field generated by photocharges created as a result of the photoconductivity of CdTe:In at 1.06 $\mu$m. The devices described by this article use a single incoming optical beam which, with an increase in intensity, causes the shielding effect and allows the beam to behave simultaneously like a signal and a control beam.

Andrea Zappettini et al., "Optically induced switching in CdZnTe", Conference on Lasers an Electro-Optics, OSA Technical Digest, pp. 283-284 (Washington DC, May 23-28,1999) examined optically induced optical switching in $Cd_{0.90} Zn_{0.10}Te$ crystals. An experiment verified efficient optical switching of a 1550 nm light beam by a control light beam having wavelengths in the range of 870-1300 nm. According to the article, free carriers photogenerated by a control beam in electrically polarized CdTe crystal generate a counterfield that locally shields the externally applied electric field, and thereby reduces the electro-optic effect. The activation time ($\tau_{on}$) of the counterfield depends on the incident photonic flux and on the applied electric field, and the recovery time ($\tau_{off}$) is related to trapping and recombination processes. CdTe-based switches have an extremely long $\tau_{off}$, in the millisecond range. The authors disclosed that the recovery time $\tau_{off}$ for the $Cd_{0.90} Zn_{0.10}Te$ crystals can be limited to the nanosecond range. Further, the authors indicated that $\tau_{off}$ in CdZnTe seems to be determined by a fast recombination center, while the slow $\tau_{off}$ in CdTe may be attributed to a detrapping mechanism.

U.S. Patent No. 5,090,824 describes an electrically controlled optical switch (i.e., electro-optical switch) using an electro-optic crystal of the type having at least one set of fast and slow optical axes. Because application of an electric field to the crystal induces birefringence, a plane of polarization oriented along a first direction of a light beam passing through the crystal may be switched to a plane of polarization oriented along a second direction. A beam splitting polarizer means disposed at one end of the crystal directs a light beam through the crystal whose plane of polarization is oriented along the first direction differently from a light beam having a plane of polarization oriented along the second direction. While the electro-optic crystal may be selected from crystal classes 43 m , 42 m , and 23, a bismuth germanium oxide crystal or a bismuth silicon oxide crystal are preferred.

U.S. Patent No. 5,305,136 describes an optically bidirectional electrically-controlled optical switch having reduced light loss. The switch includes an electro-optic crystal having one set of fast and slow optical axes and at least two light paths for receiving light beams through the crystal. The crystal exhibits electric field induced birefringence such that the orientation of the plane of polarization of a light beam passing through the crystal switches from a first direction to a second direction. Beam splitting polarizers are disposed at each end of the electro-optic crystal and optically aligned to the two light paths. The beam splitting polarizers split the optical beam into two light beams having planes of polarization oriented in the first and second directions when transmitting light to the two light paths. The polarizers also combine the two light beams into a single light beam when receiving light beams from the two light paths. In a preferred embodiment, the electro-optic crystal is a cubic crystal chosen from crystal classes 43m, 42m, and 23. Examples of appropriate crystals include bismuth germanium oxide and bismuth silicon oxide crystal.

Kohji Tada et al., "Electrically controlled optical switch," *Sumitomo Electric Technical Review,* No. 19, pp. 47-56 (Jan. 1980), describes an optical switch that utilizes $Bi_{12}SiO_{20}$ as the electro-optical material. Since $Bi_{12}SiO_{20}$ does not naturally experience birefringence, its use permits a high extinction ratio to be obtained. Also, this material is stable when subjected to changes in temperatures. Such properties favor the use of $Bi_{12}SiO_{20}$ for optical switches. Light may be passed through a polarizer to be converted into a wave having a polarization component in one direction. It may then be passed through the crystal to undergo phase modulation to form elliptically polarized light. An output-side analyzer may be used to modulate the ray's optical intensity. The authors demonstrate by theoretical analysis that selecting optical angles for the axes of the polarizer and the analyzer produces a high extinction ratio. A multi-sectional optical switch was constructed by dividing the $Bi_{12}SiO_{20}$ crystal into several wafers to reduce the half-wave voltage of the switch.

In relation to their application inside the optical communication network node, optical switches may be categorized as either packet-switches or circuit-switches. In wavelength-division-multiplexing (WDM) optical systems, circuit switches are typically employed to allow a spatial reconfiguration of the input/output routing. The circuit switches connect in a re-configurable way the input port to the output ports independently from the information carried by the routed signals. Reconfiguration of circuit switches is, for example, required for fault recovery or traffic redistribution. A switching time of milliseconds is generally acceptable. Alternately, packet-switches route data packets in relation to the data traveling in them. Header/tag sampling and recognition and packet/cell multiplexing/demultiplexing are necessary operations in the node. Very high switch times are required, in the order of the data transmission bit rate.

Applicant has discovered that the performance of conventional electro-optical switches is limited by the auto-inhibition effect of the crystals employed. The auto-inhibition effect adversely affects the electro-optic effect of such crystals. Applicant therefore believes that switches employing lithium niobate crystals with integrated technology are currently promising. Unfortunately, lithium niobate and KD*P ($KD_2PO_4$) crystals are non-isotropic and thus exhibit birefringence in the absence of an applied electric field. This intrinsic birefringence gives rise to a complexity of the switch design and requires a optimization procedure. Other electro-optic isotropic crystals, such as bismuth germanium oxide (BGO), bismuth tantalum oxide (BTO), $B_{12}SiO_{2O}$(BSO), exhibit optical activity in the window of communication. Such optical activity causes a perturbation of the state of polarization of the signal passing trough the crystal that requires a suitable compensation.

Employing those crystals in optical switches is therefore less attractive.

In general, a high quality electro-optical switch used in optical communication systems exhibits certain factors, such as low insertion loss, low cross-talk, low $V_\pi$, and a response-frequency time-constant on the order of milliseconds. Applicant has discovered that in a conventional optical communication system, switching from one state to another (corresponding to different connections among optical paths, e.g. optical fibers) may occur on occasions such that no characteristic frequency of the switching can be defined. In this case, the behavior of the switch in a fixed state for an extended period of time is equally important.

## SUMMARY OF THE INVENTION

Applicant has found that CdZnTe crystals, which exhibit electric field induced birefringence, unexpectedly experience only slight or no auto-inhibition effect near the bandedge, i.e., in a wavelength band of about 1000 - 1650 nm. Such crystals therefore exhibit better electro-optic performance than other crystals of the same 4 3 m class for those wavelengths. Applicant has further discovered that an electrically controlled optical switch employing a CdZnTe crystal exhibits better properties than conventional switches that use other types of crystals. For example, a switch having a CdZnTe crystal requires a lower half-wave voltage to operate. Also, the performance of such a switch is relatively constant for operation both in a fixed state and when the switching frequency is changed. Moreover, a higher optical signal power may be used with such a switch.

Applicant contemplates that an electrically controlled optical switch to be used in an optical communication system contains a $Cd_xZn_{1-x}Te$ crystal, where the Cd molar fraction x is between about 0.7 and 0.99. Preferably, the Cd molar fraction x is in the range $0.8 \leq x \leq 0.95$. More preferably, the Cd molar fraction x is in the range $0.85 \leq x \leq 0.92$.

A switching control unit provides to the $Cd_xZn_{1-x}Te$ crystal a switching voltage selected among a set of predetermined voltages, each voltage in the set being associated to a corresponding optical switching configuration.

The crystal exhibits electric field induced birefringence such that the switch assumes one of said switching configurations upon application of a corresponding voltage in said set.

In particular, a sufficient voltage may be applied to the $Cd_xZn_{1-x}Te$ crystal to cause the switch to change from "bar state" operation to "cross state" operation. More particularly, a switch changes from bar-state operation to cross-state operation when the half-wave voltage $V_\pi$ is applied to the crystal, thereby causing the plane of polarization of an optical beam or beams passing through the crystal to rotate 90°.

Preferably the crystal has a thickness between about 200 $\mu$m and 2 mm.

More preferably, the crystal thickness is less than 500 $\mu$m.

Advantageously, the switch is capable of operating at a switching frequency that is less than 100 Hz and preferably equal to about 0.

Input and output directing devices are positioned proximate respective input and output ends of the crystal for directing an optical beam to and from the switch. First and second input optical fibers are consecutively attached to the input directing devices, and first and second output optical fibers are consecutively attached to the output directing devices. "Bar state" operation occurs when the switch allows an optical beam to pass from the first input fiber to the first output fiber, or alternatively from the second input fiber to the second output fiber. "Cross state" operation occurs when the switch directs the optical beam from the first input fiber to the second output fiber or, alternatively, from the second input fiber to the first output fiber.

An optical beam with a wavelength in a range of 1000 to 1650 nm is provided to the electrically controlled optical switch by an optical source. The source can be, e.g., a lasers, an superfluorescent or ASE source or a LED. The optical source can be located either close or remotely from the electrically controlled optical switch. For example, the optical source can be part of a transmitting station and the electrically controlled optical switch is part of a switching node arranged in an optical transmission line or network downstream of the transmitting station.

According to one aspect, the input-directing device of the switch includes an input polarization beam splitter (PBS) and an input reflector. The input reflector is oriented to reflect an optical beam from the first input fiber to the input PBS. The input PBS is positioned to direct an optical beam from the input reflector or from the second input fiber to an optical path along the crystal. Also, the output-directing device includes an output PBS and an output reflector. The output PBS is oriented to direct an optical beam from the optical path along the crystal to the second output fiber or to the output reflector. The output reflector is configured to direct an optical beam from the output PBS to the first output fiber.

Preferably the input reflector is a right angle reflecting prism.

Preferably the output reflector is a right angle reflecting prism.

According to another aspect, the input-directing device of the switch comprises an input PBS and first and second input reflectors. The input PBS is positioned so that it may separate an optical beam coming from the first input fiber or the second input reflector into a first beam directed toward the first input reflector and a second beam directed toward a first optical path along the crystal. Furthermore, the first input reflector is oriented to reflect an optical beam from the input PBS to a second optical path along the crystal. The first optical path and the second optical path are substantially parallel to each other. The second input reflector is oriented to reflect an optical beam from the second input fiber to the input PBS.

The output-directing device of the switch includes an output PBS and first and second output reflectors. The output PBS is configured to direct an optical beam from the second optical path to the second output fiber or to the first output reflector. The output PBS is also oriented to direct an optical beam from the second output reflector to the first output reflector or the second output fiber. Moreover, the first output reflector is oriented to reflect an optical beam from the output PBS to the first output fiber. The second output reflector is positioned to reflect an optical beam from the first optical path to the output PBS.

Preferably the first and/or the second input reflectors are right angle reflecting prisms.

Preferably the first and/or the second output reflectors are right angle reflecting prisms.

An electrically controlled optical switch containing a $Cd_xZn_{1-x}Te$ crystal may be used to improve the performance of an optical communication system. The system may include, for example, first and second input transmitter stations having optical sources for generating optical signals and multiplexers for sending the generated optical signals. Respective first and second input optical fibers connect the first and second transmitter stations to the switch. The optical communication system may also include first and second receiving stations and being connected to the switch by respective first and second output optical fibers.

The first or the second receiving stations, or both, may include optical preamplifiers.

In still a further aspect the present invention is directed to a method for switching an optical signal having a wavelength in the range of 1000 to 1650 nm. The method comprises inputting the optical signal into a $Cd_x Zn_{1-x}Te$ crystal, wherein x is between about 0.7 and 0.99 and applying to the crystal a control voltage selected in a set of predetermined voltages.

It is to be understood that both the foregoing general description and the following detailed description are exemplary and explanatory only and are intended to provide further explanation of the invention as claimed. The following description, as well as the practice of the invention, set forth and suggest additional advantages and purposes of the invention.

**BRIEF DESCRIPTION OF THE DRAWINGS**

The accompanying drawings, which are incorporated in and constitute a part of this specification, illustrate embodiments of the invention and, together with the description, serve to explain the advantages and principles of the invention.

FIG. 1 is block diagram of a test set-up for examining the performance of a $Cd_xZn_{1-x}Te$ crystal consistent with an embodiment of the present invention;

FIG. 2A-2C are graphs of the actual figure of merit M versus the modulating frequency f, at low optical power, for one sample of $Cd_{0.90}Zn_{0.10}Te$ crystal, two samples of CdTe:In crystal, and one sample of GaAs crystal, respectively, consistent with an embodiment of the present invention;

FIG. 3 is a graph of the actual figure of merit M versus the beam wavelength for the sample of $Cd_{0.90}Zn_{0.10}Te$ crystal formed by taking the best linear interpolation of the measured values depicted in FIG. 2A;

FIG. 4 is a graph of measured values of $V_\pi'$ versus the beam wavelength $\lambda$ together with a linear interpolating curve for a sample of $Cd_{0.90}Zn_{0.10}Te$ crystal consistent with an embodiment of the present invention;

FIGS. 5A and 5B are graphs of the actual figure of merit M versus the optical power for f =10 Hz and f = 1 Hz, respectively, for a sample of $Cd_{0.90}Zn_{0.10}Te$ crystal consistent with an embodiment of the present invention;

FIG. 6 is a graph of the actual figure of merit M versus applied voltage amplitude $V_a$, at a modulation frequency of 1 Hz, for a sample of $Cd_{0.90}Zn_{0.10}Te$ crystal consistent with an embodiment of the present invention;

FIG. 7 is test set-up for determining the absorption factor $\alpha$ was measured for crystal samples consistent with embodiments of the present invention;

FIG. 8 is a graph of output power $P_{out}$ versus total phase shift $\Delta\varphi_{tot}$ of an optical signal passing through the test set-up of FIG. 1;

FIG. 9 is a graph of 1 - I(V)/(V=0) versus optical beam power $P_{in}$ for a crystal in the test set-up of FIG. 1;

FIG. 10 is a block diagram of a polarization-sensitive electro-optical switch consistent with one embodiment of the present invention;

FIG. 11 is a block diagram of a polarization-insensitive electro-optical switch consistent with another embodiment of the present invention;

FIG. 12 is a block diagram of a WDM system including the polarization-insensitive electro-optical switch of FIG. 11;

FIG. 13 is a block diagram of a 4x4 optical cross-connect switch for an optical communication system including the polarization-insensitive electro-optical switches of FIG. 11; and

FIG. 14 is a block diagram of an optical cross-connect switch with wavelength interchange including 4x4 optical electro-optical switches of FIG. 13.

## DETAILED DESCRIPTION OF THE PREFERRED EMBODIMENTS

Reference will now be made to various embodiments according to this invention, examples of which are shown in the accompanying drawings and will be obvious from the description of the invention. In the drawings, the same reference numbers represent the same or similar elements in the different drawings whenever possible.

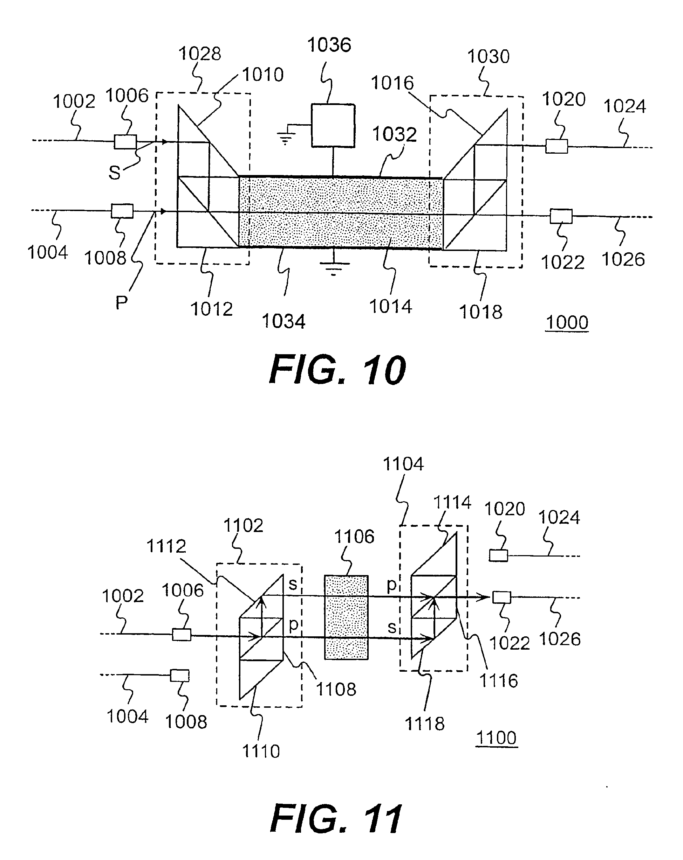

FIGS. 10 and 11 illustrate electro-optical switches 1000 and 1100 consistent with preferred embodiments of the present invention. Switches 1000 and 1100 comprise a $Cd_xZn_{1-x}Te$ crystal. The Cd molar fraction x is in the range $0.7 \leq x \leq 0.99$. Preferably, the Cd molar fraction x is in the range $0.8 \leq x \leq 0.95$. More preferably, the Cd molar fraction x is in the range $0.85 \leq x \leq 0.92$.

The electro-optical switches 1000 and 1100 operate for optical signals (i.e., beams) having, for example, wavelengths in the range of 1480 nm to 1610 nm. Preferably, the wavelengths of the optical signals are in the 1510 nm to 1610 nm range, which corresponds to the so-called "third windows" of optical communication. The electro-optical switches 1000 and 1100 may alternatively employ optical signals having wavelengths in the 1300 nm to 1350 nm range ("second window"). In general, the electro-optical switches 1000 and 1100 may employ optical signals having wavelengths in the 1000 nm to 1650 nm range.

The optical switch 1000 depicted in FIG. 10 is a bidirectional 2x2 optical switch that can be employed as a cross-bar device. First and second input optical fibers 1002 and 1004 affiliated with switch 1000 transmit optical signals to and from the switch via first and second collimators 1006 and 1008. Switch 1000 also includes first and second optical elements 1028 and 1030, $Cd_xZn_{1-x}Te$ crystal element 1014, third and fourth collimators 1022 and 1020, and first and second output optical fibers 1024 and 1026. First optical element 1028 comprises a first polarization beam splitter 1012 and a conventional right angle reflecting prism 1010. The second optical element 1030 comprises a second polarization beam splitter 1018 and a second conventional right angle reflecting prism 1016.

In typical operation for electro-optical switch 1000, an optical signal indicated as "signal S," which is in a linear state of polarization S, initially passes through the first input optical fiber 1002 to collimator 1006. Right angle reflecting prism 1010 reflects the collimated signal S emerging from collimator 1006 to the first polarization beam splitter 1012. The first polarization beam splitter 1012 is oriented so as to direct the signal S along crystal element 1014.

An amplified voltage V may be applied across crystal element 1014 by a switching control unit 1036 using suitable electrodes 1032 and 1034. Crystal element 1014 is arranged in the configuration known as the AM-cut. When operating in a bar state (i.e., connection from input fiber 1002 to output fiber 1024), switching control unit 1036 applies a voltage V = 0 to the crystal element 1014, no polarization rotation being induced.

Signal S is then directed by second polarization beam splitter 1018 and right angle reflecting prism 1016 to collimator 1020 and first output optical fiber 1024. To switch from bar-state operation to cross-state operation (i.e., connection from input fiber 1002 to output fiber 1026), a voltage $V = V_\pi$ may be applied to crystal element 1014 from switching control unit 1036, resulting in a polarization rotation of 90°. In this manner, signal S is converted into a "signal P," i.e., a signal having a linear state of polarization orthogonal to the state S. The signal P is transmitted by second polarization beam splitter 1018 to second output optical fiber 1026. It will be evident to one of ordinary skill in the art that a signal P entering device 1000 from second input optical fiber 1004 may be switched in a similar manner as that described for input signal S at input fiber 1002. Device 1000 is polarization dependent because its operation requires the entering signals at the corresponding inputs to have a linear state of polarization S or P.

An embodiment of a bidirectional and polarization-insensitive switch 1100 is schematically depicted in FIG. 11. The architecture of switch 1100 allows the optical switch to operate independent of polarization. Device 1100 comprises first and second input optical fibers 1002 and 1004; first and second collimators 1006 and 1008; first and second optical elements 1102 and 1104; $Cd_xZn_{1-x}Te$ crystal element 1106; third and fourth collimators 1022 and 1020; and first and second output optical fibers 1024 and 1026. First optical element 1102 comprises a first polarization beam splitter 1108 and two conventional right angle reflecting prisms 1110 and 1112. Second optical element 1104 comprises a second polarization beam splitter 1116 and two conventional right angle reflecting prisms 1114 and 1118.

The operation of device 1100 in the case of cross state (i.e., connection from input fiber 1002 to output fiber 1026) is described below with reference to FIG. 11. An input optical signal having a random state of polarization enters switch 1100 via first input optical fiber 1002. It passes through collimator 1006 and thereby becomes a collimated signal. The optical signal is then transmitted to polarization beam splitter 1108 where it is separated into two beams having orthogonal states of polarization S and P, respectively. The beam S is reflected by right angle reflecting prism 1112 such that the two beams follow two separate parallel optical paths. Beams S and P propagate respectively along an upper region and a lower region of crystal element 1106. The propagation direction of the incoming optical beams with respect to crystal element 1106 is along crystalline axis < 1 10 >. If no voltage is applied to crystal element 1106, no polarization rotation of the optical beams takes place in crystal element 1106. Polarization beam splitter 1116 and right angle prism 1118 combine the two beams in a single optical beam, that is reflected by right angle reflecting prism 1114 towards collimator 1020 and to output fiber 1024.

To carry out cross-state switching, a voltage $V = V_\pi$ is applied to crystal element 1106 to create an external electric field across the crystal. In response, beams S and P undergo a polarization rotation of 90° such that beam S becomes a P beam and beam P becomes an S beam at the output of crystal element 1106. Upon reaching polarization beam splitter 1116, the P beam is transmitted to second output fiber 1026, and the S beam is reflected by right angle reflecting prism 1118 in a direction toward second output fiber 1026. The beams are therefore recombined at the predetermined output and sent to output fiber 1026. Since the beams follow optical paths having equal lengths, no time delay is introduced between the two beams during their passage.

Other methods for operating switch 1100 would be apparent to those skilled in the art from the above description and the figures. For example, bar-state operation or operation in which the optical beam enters in an optical fiber different from fiber 1002 could be performed. The switches may operate at any switching frequency f. In particular, they may operate as circuit-switches or packet-switches. Preferably, the switching frequency f is less than 100 Hz. More preferably, the switching frequency is f = 0, such that switching from one state to another occurs only occasionally and the switch operates predominantly in a fixed state for an extended period of time.

Switches 1000 and 1100 may be realized using the following components. The polarization beam splitters and the right angle reflecting prisms may, for example, be manufactured by NITTO (Japan). Preferably, all the optical components are treated with anti-reflection coatings. The collimators, which are suitably connected to the corresponding optical fibers may be "grin-rod" (graded index) lenses available under the trade name SELFOC™ from NSG (Japan). To ensure temperature and mechanical stability for optical switches 1000 and 1100, each may be placed on a Macor™ (trade name of Corning Glaxo (USA)) board provided with aluminum supports for sustaining the lenses. The electrodes may be formed by depositing, in a known manner a gold film, e.g. by under vacuum evaporation, on the $Cd_xZn_{1-x}Te$ crystal. A silicon paste may be used to avoid subjecting the $Cd_xZn_{1-x}Te$ crystal to stresses that might lead to deformations in the crystal. Such stresses might otherwise be caused by the applied electric field. A conventional paste may be employed to fix the other optical components. The Macor™ board supporting the switches may be inserted into an aluminum box provided with a controller for controlling the electrical voltage.

The switches may operate with optical signals having power in accordance with the power employed for optical signals in telecommunication systems. The optical power density, i.e., the ratio between the power $P_{in}$ and the area of the entering beam section, is preferably lower than 100 mW/mm$^2$. More preferably, the optical power density is lower than 15 mW/mm$^2$.

The length L of the $Cd_xZn_{1-x}Te$ crystal 1014 and 1106 employed in switches 1000 and 1100 is chosen in order to reach a suitable value of the half-wave voltage $V_\pi$. Increasing the length L reduces the half-wave voltage $V_\pi$ but may cause the crystal to become more fragile. Preferably, the length L of $Cd_xZn_{1-x}Te$ crystal 1014 and 1106 is less than about 15 mm but more than about 10 mm. The distance d between the electrodes for voltage application, i.e. the thickness of the crystal, can also be reduced to lower the value of the half-wave voltage $V_\pi$. Preferably, the distance d is between about 200 $\mu$m and 2 mm. More preferably, the distance d is less than about 500 $\mu$m. By increasing the third dimension of the $Cd_xZn_{1-x}Te$ crystal, many different parallel optical beams may propagate inside the crystal. In this way, the simultaneous switching of many beams can be achieved. Moreover, integrated optic structures through which the optical signal to be switched may be guided using $Cd_xZn_{1-x}Te$ waveguides may be developed within the capability of those skilled in the art.

## Example 1

Applicant tested the behavior of crystal samples of $Cd_{0.90}Zn_{0.10}Te$ in comparison with other crystal samples having a zinc-blend structure. For the following experiments, if not explicitly indicated, the optical beam entering the crystal sample underwent linear polarization along the crystalline axis <110> to which the electric field was applied. Propagation of the beam was directed along crystalline axis < 1 10 >. In addition, the crystals were arranged in the configuration known as AM-cut. The application of the external electric field along axis <110> ensured the best electro-optic efficiency for that configuration of zinc-blend crystals.

All the crystal samples were parallelepiped shaped having a square base of dimension d x d and length L. More specifically, the following samples were used:

- Samples $A_1$ and $A_2$: $Cd_{0.90}Zn_{0.10}Te$, d=2 mm, L=10 mm.
- Sample $B_1$: CdTe:ln, d=5 mm, L=10 mm.
- Sample $B_2$: CdTe:ln, d=2.5 mm, L=10 mm.
- Sample C: GaAs, d=5 mm, L=15 mm.

Samples $A_1$, $A_2$, $B_1$, and $B_2$ were made by eV Product (PA, USA) and commercialized by II-VI Inc. (PA, USA). Sample C was made by CNR-MASPEC, a research center located in Parma, Italy.

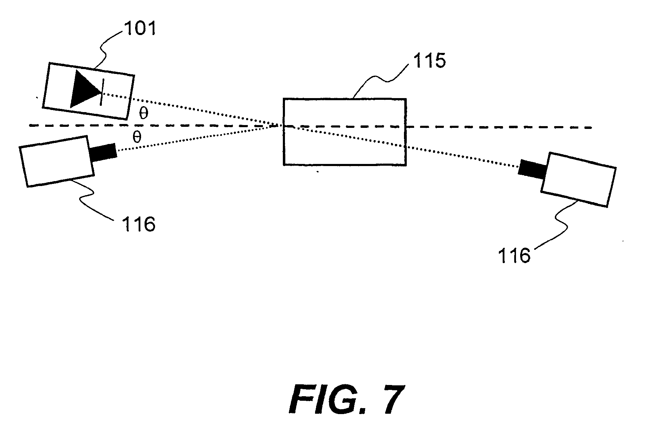

First, the absorption factor $\alpha$ was measured for each of the samples $A_1$, $A_2$, $B_2$, and C. For samples $A_1$, $B_1$, and $B_2$, the experiment was set up according to the configuration depicted in FIG. 7. A laser source 101 emitted an incident light beam at a wavelength of $\lambda$=1550 nm with a maximum power of 540 $\mu$W. Crystal sample 115 was oriented such that the incident light beam formed a relatively small angle $\theta$ with the axis orthogonal to its base.

Crystal 115 partially transmitted the incident light beam and partially reflected the light beam in a direction symmetric to the incident light beam. Power meters 116 were used to measure the intensities $I_0$, $I_R$, and $I_T$ corresponding respectively to the powers of the incident, reflected, and transmitted light beams. For determining the absorption factor $\alpha$, the following expressions were used:

$$I_R = I_0\left(1 - \frac{(1-R)^2\, e^{-2\alpha L}}{1 - R^2 e^{-2\alpha L}}\right) \tag{2}$$

$$I_T = I_0\left(\frac{(1-R)^2\, e^{-\alpha L}}{1 - R^2 e^{-2\alpha L}}\right) \tag{3}$$

where R is the reflection factor. The other parameters have been defined above.

Because sample $B_1$ contained an anti-reflection coated base, it was not tested. MASPEC's laboratory determined the absorption factor of sample C using a Fourier Transform Interferometer (FTIR) technique. Table 1 indicates values of $\alpha$ for Samples $A_1$, $A_2$, $B_2$, and C.

TABLE 1

| $\lambda$ | Sample $A_1$ ($Cd_{0.90}Zn_{0.10}Te$) $\alpha$ | Sample $A_2$ ($Cd_{0.90}Zn_{0.10}Te$) $\alpha$ | Sample $B_2$ (CdTe:ln) $\alpha$ | Sample C (GaAs) $\alpha$ |
|---|---|---|---|---|
| 1550 nm | 0.19 cm$^{-1}$ | 0.23 cm$^{-1}$ | 0.09 cm$^{-1}$ | 1.18 cm$^{-1}$ |

All the samples tested at a wavelength of 1550 nm are in a region of the absorption spectra near the bandedge, as defined above.

At 1550 nm, the absorption factors for samples $A_1$ and $A_2$ are greater than the absorption factor of sample $B_2$. Accordingly, Applicant first believed that the photo-generation and the space-charge effect should have been greater for samples $A_1$ and $A_2$ than for sample $B_2$ at 1550 nm. However, this theory was later proved to be incorrect.

In addition, the absorption of samples $A_1$ and $A_2$ was measured at a wavelength of 1064 nm, resulting in absorption values of 0.24 cm$^{-1}$ and, respectively, of 0.26 cm$^{-1}$ for the two samples.

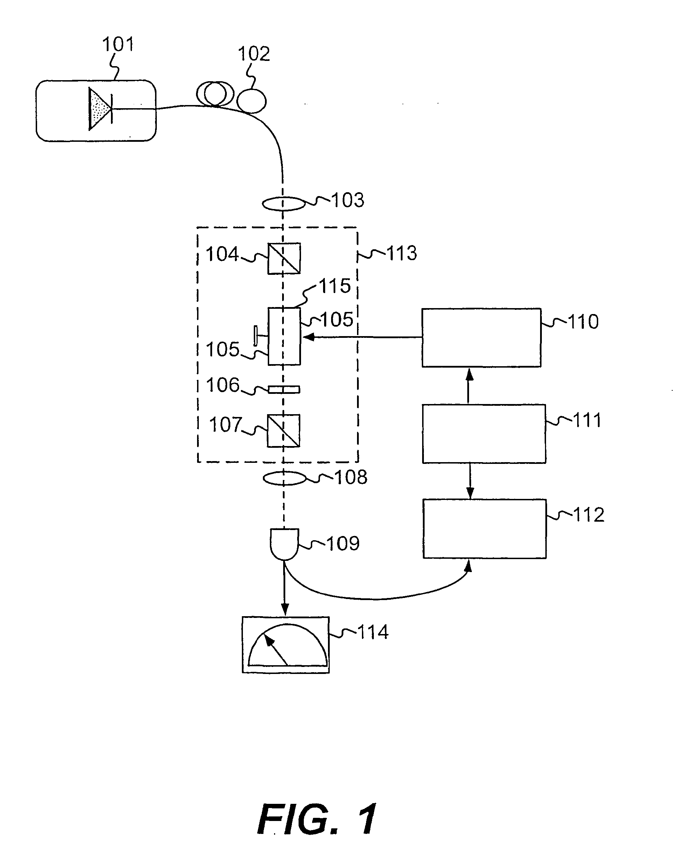

The electro-optic qualities of the samples were determined by measuring the characteristic parameter behaviors at different operating conditions. FIG. 1 schematically shows the system used to take such measurements. This system includes a pigtailed laser diode 101 made by NEC (USA),having an output coupled to a single mode fiber connected to a conventional polarization controller 102. Polarization controller 102 comprises a plurality of optical fiber coils, suitably stressed, disposed in succession and supported such that they can be oriented with respect to a common axis of alignment to provide the desired polarization control.

The output of polarization controller 102 is optically coupled to a conventional collimating lens 103 followed by an optical system 113. Optical system 113 comprises a polarization beam splitter (PBS) 104 optically coupled to crystal sample 115, a quarter waveplate 106, and a polarization analyzer 107, i.e. a second PBS. Bernard Halle made the particular quarter waveplate 106 used in this example, and the PBS 107 was of the Glenn-Thomson type. The sample 115 is mounted on a movable and manually adjustable base (not shown) that allows a resolution of one micrometer to be achieved. A focusing lens 108 is positioned between optical system 113 and a photodiode 109, coupling the two together.

A function generator 111 produces the modulating electric field to be applied to crystal sample 115. The function generator selected for this example was model 5100A made by Krohn (MA, USA). This particular function generator could produce a modulated electric voltage up to 3 MHz having an amplitude of a few volts. An amplifier 110 is used to amplify the electric signal generated by function generator 111. A Krohn Hite 7602M amplifier served as amplifier 110 in this example. This particular amplifier could reach a maximum amplitude of 400 $V_{pp}$ (voltage peak-to-peak) in the above indicated frequency range.

Two electrodes 105 separated by a distance equal to d of the crystal sample permit the application of the amplified voltage to crystal sample 115. A lock-in amplifier 112 is connected to photodiode 109 and to function generator 111. The Stanford-SR830 DSP, CA (USA) was selected as lock-in amplifier 112.

Photodiode 109 is also connected to an electronic multimeter 114. More specifically, photodiode 109 was an InGaAs photodiode made by New Focus (USA), No. 1811, having a bandwidth of 125 MHz. PBS 104 may be used to select the vertical or the horizontal optical beam polarization forming an angle of 45° with the dielectric axes of crystal sample 115, which are induced by the external applied electric field.

First, the described set up of FIG. 1 was used to analyze changes in the electro-optic behavior of the above-indicated samples for variations in the electric voltage frequency. Laser 101 generated an optical beam having a wavelength $\lambda$, of 1554 nm and having a maximum power of about 540 $\mu$W. Polarization controller 102 was suitably oriented in order to maximize the optical power transmission of optical system 113. Lens 103 was used to obtain a beam with a waist of about 115 $\mu$m. The polarization of the optical beam suitable for interaction with crystal sample 115 was selected using PBS 104, as mentioned above. Function generator 111 produced a voltage V as a sinusoidal function having amplitude $V_a$ and angular frequency $\omega$ : $V = V_a \sin(\omega t)$. The value of $V_a$ was maintained at or below 50 Volts, which was significantly less than the half-wave voltages $V_\pi$ of the samples. This variable external voltage V induced a variable birefringence in crystal sample 115.

The base holding crystal sample 115 was manually adjusted to position and angle crystal sample 115 so that its optical surfaces were perpendicular to the incoming optical beam. The voltage V applied to crystal sample 115 caused the polarization components of the passing optical beam to be propagated along two different dielectric axes with different phase velocities. The optical beam thus underwent a phase shift $\Delta_{\varphi ext}$ represented by the known expression:

$$\Delta \varphi_{ext} = \frac{2\pi}{\lambda} \frac{L}{d} n_0^{\ 3} r_{41} V \qquad (4)$$

where $\lambda$ is the optical beam wavelength, L and d are the above-mentioned crystal sample size, and $r_{41} n_0^3$ is the figure of merit.

The optical axis of quarter-wave plate 106 formed an angle of 45° with the polarization direction of the optical beam emerging from crystal sample 115. Quarter-wave plate 106 produced a phase shift in the optical beam equal to $\Delta\varphi_{\lambda/4} = \pi/2$, corresponding to a polarization rotation of 45°. Optical system 113 produces a transmission function:

$$P_{out} = P_{in} \sin^2 \left( \frac{\Delta\varphi_{tot}}{2} \right) \qquad (5)$$

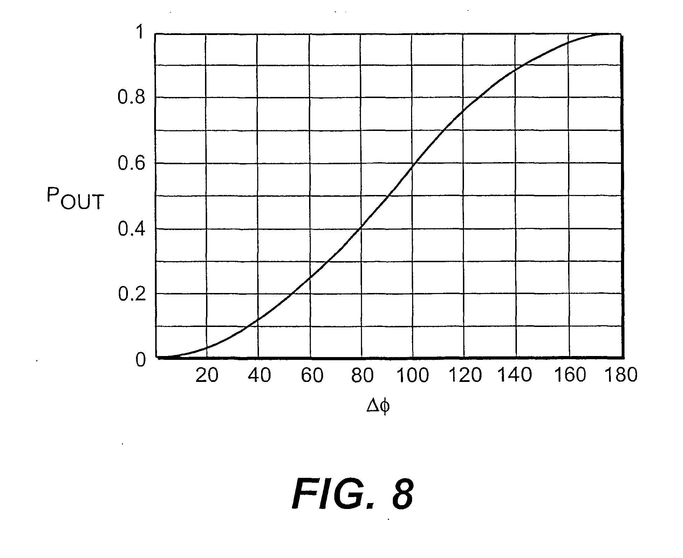

where $P_{in}$ is the power of the optical beam entering optical system 113, $P_{out}$ is the power of the optical beam emerging from optical system 113, and $\Delta\varphi_{tot}$ is the phase shift equal to the sum of the shift induced by the external field $\Delta\varphi_{ext}$ and the shift caused by the quarter-wave plate, $\Delta\varphi_{\lambda/4}=\pi/2$. Applying quarter-wave plate 106 and a low value of voltage V to crystal sample 115 caused the optical beam to operate in a linear region of the transmission function T of optical system 113. The linear region corresponds to the controflexure point of the function depicted in FIG. 8, which is a plot of T ($P_{out}$) versus $\Delta\varphi_{tot}$. Then:

$$\Delta\varphi_{tot} = \Delta\varphi_{ext} + \Delta\varphi_{\lambda/4} = \frac{2\pi}{\lambda} \frac{L}{d} n_0^3\, r_{41} V + \frac{\pi}{2} \qquad (6)$$

The electric signal detected by photodiode 109 was demodulated in frequency and phase by lock-in amplifier 112. The peak-to-peak amplitude $\Delta V_{out}$ of the modulation induced by the electro-optic effect was determined. Multimeter 114 indicated the average component $V_{out}$ of the detected signal. Employing such a lock-in demodulation technique allows a good signal/noise ratio to be achieved, providing for a good sensitivity of the measurement. Applicant has detected signals modulated with an amplitude of a few $\mu$V by using this technique. For measures taken at high frequency, for example f>100 kHz, the peak-to-peak values may be determined using an oscilloscope, since the lock-in amplifier's band is limited to 120 kHz.

The actual figure of merit M was determined for several values of electrical frequency using the following equation:

$$M = \frac{\lambda}{2\pi} \frac{d}{L} \frac{\Delta V_{out}}{V_{out}} \frac{1}{\Delta V} \Bigg|_{\Delta V \to 0} \qquad (7)$$

where $\Delta V = 2\,V_a$ is the peak-to-peak amplitude of the voltage applied to crystal 115, $\Delta V_{out}$ is the peak-to-peak amplitude of the voltage detected by photodiode 109, $V_{out}$ is the average component of the voltage detected by photodiode 109, $\lambda$ is the optical beam wavelength, and d and L are dimensions of the crystal. The actual figure of merit M represents the actual electro-optic capacity of crystal 115 under experimental conditions. This measured M may be different from the figure of merit $n_0^3\, r_{41}$ characteristic of the type of crystal employed as crystal 115. The expression (7) was obtained by using expressions (5) and (6) above, while considering that the power involved allows a linear behavior of the crystal.

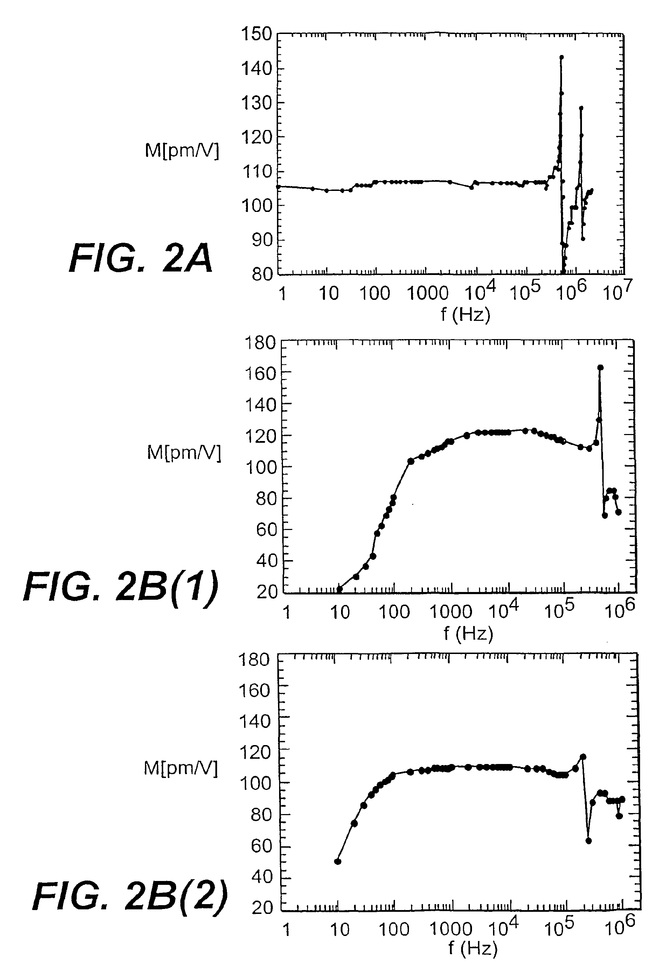

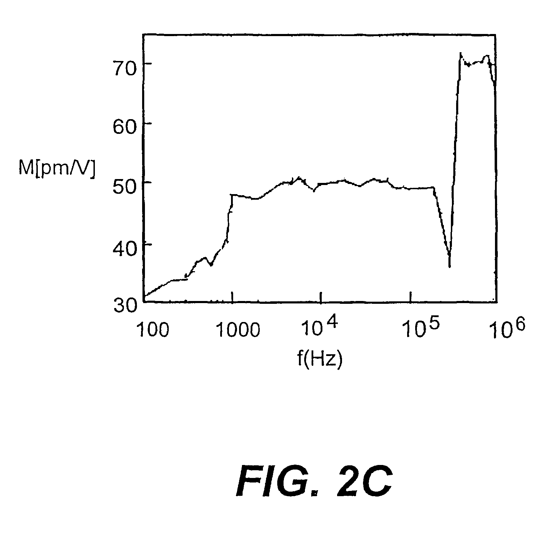

The steps described above were repeated on crystal samples $A_1$, $B_2$, $B_1$, and C using different modulating frequencies ranging from 1 Hz to 2.2 MHz. FIG. 2 illustrates graphs of the actual figure of merit M versus the modulating frequency f for the crystal samples $A_1$, $B_2$, $B_1$, and C. Applicant has found that for samples $B_1$, $B_2$, and C, the actual figure of merit behavior is divided into three regions:

- a first region where M shows a resonating behavior;
- a second region where M is substantially constant; and
- a third region where M decreases with the decreasing of the frequency f.

For the CdTe:In samples, $B_1$ and $B_2$, the resonating behavior occurred at f > 100 kHz. The value of M remained substantially constant for frequencies between 100 Hz and 100 kHz, and M decreased at f < 100 Hz. For the GaAs sample, C, the resonating behavior occurred at f > $10^5$ Hz. For frequencies between $10^3$ Hz and $10^5$ Hz, M became substantially constant at about 50 pmN. M decreased at f < $10^3$ Hz. In particular, for f =$10^2$ Hz the actual figure of merit was about 30 pmN.

In addition, Applicant observed that for the $Cd_{0.90}Zn_{0.10}Te$ sample, $A_1$, M exhibited a resonating behavior at f > 500 kHz and remained substantially constant for f < 200 kHz. For f < 200 kHz, the $Cd_{0.90}Zn_{0.10}Te$ sample exhibited a different behavior from the other samples in that M did not substantially decrease. Applicant believes that the decrease in M in the third region for samples $B_1$, $B_2$, and C was due to the auto-inhibition effect becoming stronger for low frequency modulation. Further, Applicant believes that the substantially constant value of M for the $Cd_{0.90}Zn_{0.10}Te$ sample at f < 100 kHz indicates that the auto-inhibition effect was absent or minimized.

As shown in Table 1 above, the $Cd_{0.90}Zn_{0.10}Te$ sample had an absorption factor greater than the CdTe:In samples at a wavelength of 1550 nm. A connection exists between the auto-inhibition effect and the charge carriers generated by light absorption, i.e. photo-generation. Believing that all the light power absorbed excites free charge carriers and that no other type of light absorption occurs, Applicant first presumed that the $Cd_{0.90}Zn_{0.10}Te$ sample would undergo a stronger auto-inhibition effect than the CdTe:In samples. The absence or weakness of the auto-inhibition effect in the $Cd_{0.90}Zn_{0.10}Te$ sample was thus surprising. A possible explanation for this unexpected result may be that the photo-generated carriers of the $Cd_{0.90}Zn_{0.10}Te$ had a recombining velocity greater than the carriers of the other samples. The $Cd_{0.90}Zn_{0.10}Te$ charge carriers, therefore, could have recombined more easily and more efficiently, resulting in a reduction in the counter electric field responsible for the auto-inhibition effect.

As indicated in Table 1, the GaAs sample had the greatest absorption factor. By exhibiting the lowest value of M of all the samples, the GaAs sample performed as expected based on its high absorption factor.

The similar behavior of the three samples $B_1$, $B_2$ and C in the second region, may be explained considering that the photo-generated charge carriers were incapable of following the rapid oscillations of the external electric field at such a high frequency. As such, no efficient counter field could be produced.

In the second region of sample $B_1$ and in the non-resonating region of sample $A_1$ where the auto-inhibition effect is absent, the corresponding figures of merit and electro-optic coefficients may be determined. Those parameters depend only on the material properties of the crystals and are known as "unclamped" parameters. Further, for frequencies higher than the one corresponding to the first resonance, it is also possible to determine the figure of merit and the electro-optic coefficient, which are called "clamped" parameters. The clamped and unclamped parameters for samples $A_1$ and $B_1$, obtained by averaging out the results of several measures are shown in Table 2. The corresponding estimated uncertainty of each measurement is also shown. Applicant used the values of the refraction indices no indicated in the article S. Adachi et al., "Refractive Index Dispersion in $Zn_{1-x}Cd_xTe$ Ternary Alloys" *J. Appl. Phys.,* Vol. 32, pp. 3866-3867 (1993).

TABLE 2

| Material | $n_0{}^3 r_{41}$ pm/V unclamped | $r_{41}$ pm/V unclamped | $n_0{}^3 r$ pm/V clamped | $r_{41}$ pm/V clamped | $n_0$ @ 1550 nm |
|---|---|---|---|---|---|
| $Cd_{0.90}Zn_{0.10}Te$ ($A_1$) | $106 \pm 4$ | $5.2 \pm 0.2$ | $96 \pm 6$ | $4.7 \pm 0.3$ | 2.732 |
| CdTe:In ($B_1$) | $106 \pm 2$ | $5.2 \pm 0.1$ | $90 \pm 4$ | $4.4 \pm 0.2$ | 2.736 |

In another experiment, Applicant tested the electro-optic behavior of sample $A_1$ in response to variations in the optical beam wavelength. The measured values of the actual figure of merit M were observed to change as the optical beam wavelength was varied. The set up discussed above with reference to FIG. 1 was employed for the test. In this case, the voltage amplitude V and the frequency f were kept constant. In particular, the frequency used was 50 kHz. The measures were carried out for several optical beam wavelengths ranging from 1480 nm to 1590 nm. The power of the optical beam was less then 500 $\mu$W.

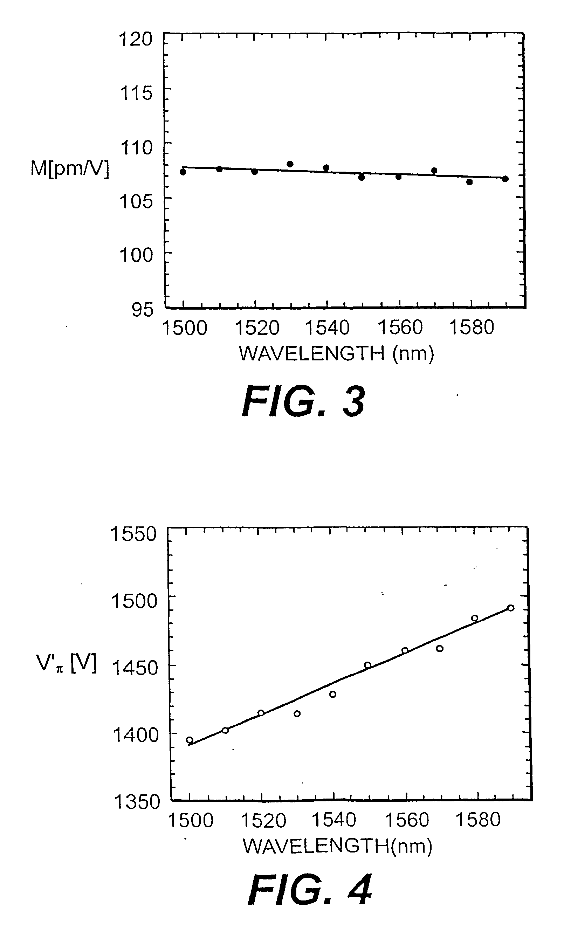

The values of M for sample $A_1$ have been determined using expression (7) as indicated above. FIG. 3 shows a plot of M versus wavelength formed by taking the best linear interpolation of the measured values. The value of M remained relatively constant in the wavelength range chosen for the test. Applicant believes that this behavior is in accordance with theoretical prediction because the measures were carried out in a region where no resonant effects are present and the electro-optic coefficient $r_{41}$ and the refraction index no do not produce considerable dispersion phenomena. The value of M actually decreased slightly as the wavelength increased. This trend may be a result of the dependence of the refraction index no on the optical beam wavelength.

In addition, the measured values of M and $\lambda$ may be substituted into expression (1) to calculate the actual half-wave voltage $V_\pi'$ of the sample $A_1$.

$$V_\pi' = \frac{\lambda}{2} \frac{1}{M} \frac{d}{L} \tag{8}$$

FIG. 4 illustrates the measured values of $V_\pi'$ versus the beam wavelength $\lambda$ together with a linear interpolating curve. In the wavelength range considered, $V_\pi'$ underwent an increase of 7%.

Further, Applicant measured the figure of merit $n_0{}^3 r_{41}$ behavior of the $Cd_{0.90}Zn_{0.10}Te$ crystal sample $A_1$ for optical beam power variations. The optical beam generated from laser source 101 was amplified using an erbium-doped fiber amplifier model Ampliphos™, made by the Applicant. This amplifier is capable of supplying a maximum continuous power of about 11 mW at $\lambda$ = 1550 nm. The measurements were taken for two values of the function generator frequency f, i.e. f = 10 Hz and f = 1 Hz, and for a voltage V equal to about 20 Volts.

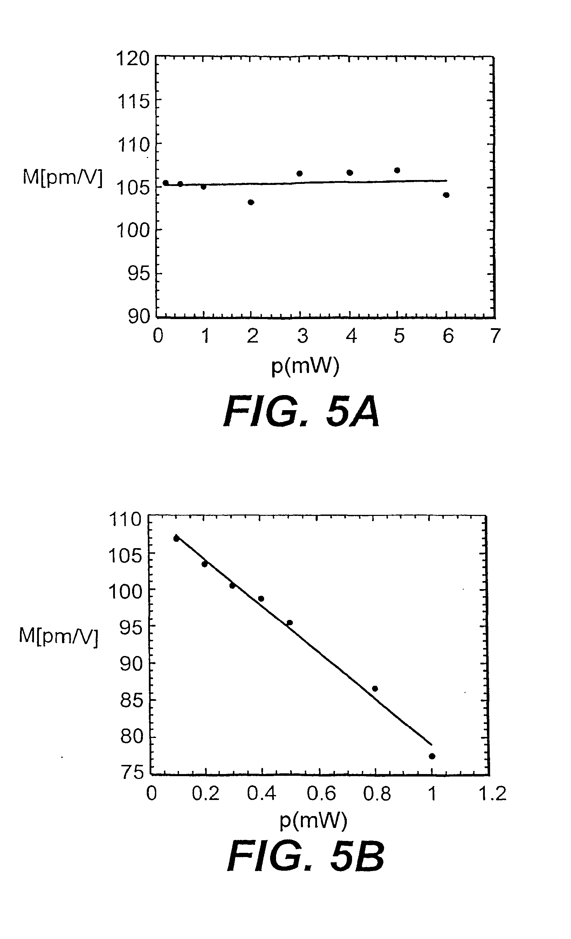

FIGS. 5A and 5B show respectively the actual figure of merit M versus the optical power in mW for f = 10 Hz and f = 1 Hz with reference to sample $A_1$. In FIGS. 5A and 5B, the linear interpolation curves of the measured points are also indicated. For f = 10 Hz, the $C_{d.90}Zn_{0.10}Te$ crystal sample exhibited an actual figure of merit substantially constant over a range of optical beam powers. The slight variation in M shown in FIG. 5A is probably due to uncertainty in the measurements taken. The instability of the experimental set-up, e.g., laser source instability, may cause the measurements to vary slightly. This behavior can be explained considering that the auto-inhibition effect at f = 10 Hz and at 1550 nm is not remarkable.

In addition, Applicant notes that for f = 1 Hz and V = 20 Volts the $Cd_{0.90}Zn_{0.10}Te$ crystal sample $A_1$ has an actual figure of merit that is dependent on the optical beam power. In particular, for an optical beam power of 1 mW, the electro-optic effect is reduced by about 25%. A possible explanation of this experimental result is that increasing the optical beam power causes the photo-generated electric counter-field to increase. Consequently, the degree of shielding created by the external electric field becomes considerable.

Applicant also measured the behavior of the actual figure of merit M of sample A, for external voltage amplitude variations. The equipment set up shown in FIG. 1 provided with the erbium-doped fiber amplifier, Ampliphos™, was used along with expression (7) to determine the M values. The frequency was maintained at f = 1 Hz, and the optical beam power was maintained at P = 4 mW while the voltage amplitude $V_a$ was varied from about 20 V to about 200 V.

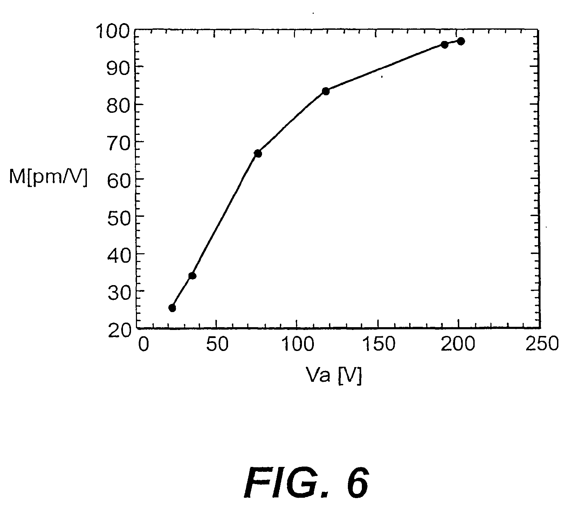

FIG. 6 depicts a plot of M versus $V_a$ for sample $A_1$. As shown, M increases as $V_a$ increases until it reaches a saturation value corresponding to the unclamped value $n_0^3 r_{41}$, which is equal to about 97 pmN at $V_a$ = 202.5 V. Applicant believes that the region in which M increases with the voltage $V_a$ corresponds to a region of non-compensated counter-field, and thus to a region experiencing the auto-inhibition effect. At the saturation point where M becomes relatively constant, a complete compensation of the auto-inhibition field is achieved by means of the external electric field. Applicant believes that the counter-field remains constant for a fixed value of optical beam power and that an increase in the external electric field balances the counter-field. In contrast, for the previous test, the voltage $V_a$ = 20 V was insufficient to compensate the counter-electric field.

Moreover, Applicant remarks that the determined voltage $V_a$=202.5 V able to compensate the counter-electric filed is considerably lower than the half-wave voltage $V_\pi$ = 1460 V of the sample $A_1$ determined by expression (1).

Applicant further observed the behavior of samples $A_1$ and $B_1$ in response to an increase in optical beam power $P_{in}$ as the voltage V was maintained at a constant value. This test was carried out at a wavelength $\lambda$ = 1550 nm using the equipment depicted in FIG. 1. A power meter was optically coupled to one output of the second PBS in order to measure the power intensity I transmitted by the optical system.

For each value of the optical power, the ratio between the power intensity transmitted by the optical system corresponding to an external voltage V and the power intensity corresponding to a null voltage V = 0, i.e., I(V)/I(V=0), was measured. For V=0, no polarization rotation occurred in the sample and the maximum transmission was achieved. For a non-zero V, the measured power intensity was lower because part of the optical power underwent a polarization rotation and was transmitted to another output of the second PBS. In other words, the power meter was strategically placed so that the intensity of the beam having non-rotated polarization could be measured.

A voltage $V = V_\pi$ = 1460 V was applied to the sample $A_1$, resulting in a polarization rotation of 90° for the incoming optical beam. For the $Cd_{0.90}Zn_{0.10}Te$ sample $A_1$ increasing the optical power until it reached a value of 11 mW did not cause the ratio I(V)/I(V=0) to change. Applicant believes that increasing the optical power neither influenced the polarization rotation nor caused an electric counter-field capable of shielding the external field generated by the voltage V.

In addition, Applicant tested the behavior of the CdTe:In sample $B_1$. The sample $B_1$ had the following half-wave voltage:

$$V_\pi = \frac{\lambda}{2} \frac{1}{r_{41} n^3_0} \frac{d}{L} = 3660 \text{ V} \qquad (9)$$

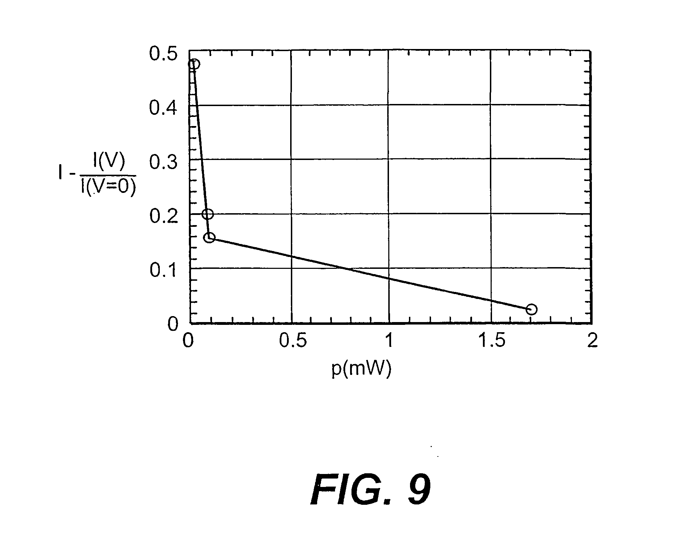

The electrical generator and the electrical amplifier employed for the test could not produce a voltage amplitude as high as 3600 V, so the test was performed at 2500 V. The measured values of 1-I(2500 V)/I(V=0) for different optical beam powers $P_{in}$ are shown in FIG. 9. For $P_{in}$ = 0.016 mW, the ratio I(2500 V)/I(V=0) equaled 0.525, and 1-I(2500 V)/I(V=0) equaled 0.475. In this case, about half of the incoming power was transmitted to the other output of the second PBS following polarization rotation. The value of 1-I(2500 V)/I(V=0) decreased as $P_{in}$ was changed from 0.076 mW to 0.083 mW.

At $P_{in}$= 1.7 mW, the ratio I(2500 V)/I(V=0) equaled 0.976, and 1-I(2500 V)/I(V=0) equaled 0.024. The power transmitted for V = 0 was almost equal to the power transmitted for V = 2500 V. Increasing the optical power therefore considerably influences the polarization rotation introduced by the sample $B_1$.

Applicant believes that the counter electric field that takes place in the CdTe:In sample is sufficient to completely shield the external electric field. The behavior of the GaAs sample C was also observed in conditions analogous to those used to analyze the behavior of sample $B_1$. Sample C exhibited worse performance than sample $B_1$.

Also, in performing a duration test, Applicant experimentally found that the performances of the $Cd_{0.9}Zn_{0.1}Te$ sample $A_1$ did not change after one hour of operating at $\lambda$ = 1550 nm, $P_{in}$ = 500 $\mu$W, and V = $V_\pi$ =1460 V.

The experimental tests on the present invention demonstrate that, notwithstanding the $Cd_{0.9}Zn_{0.1}Te$ crystal having a higher light absorption coefficient than the CdTe:In crystal, the $Cd_{0.9}Zn_{0.1}Te$ crystal exhibits better electro-optic performance when used in conjunction with optical wavelengths and optical powers characteristic of optical communication systems. A $Cd_{0.9}Zn_{0.1}Te$ crystal permits an optical switch to operate without experiencing the auto-inhibition effect. A $Cd_{0.9}Zn_{0.1}Te$ crystal achieves the polarization conversion by means of a voltage amplitude $V=V_\pi$ in a broad optical power range when the optical beam is applied at an electric voltage frequency less than 100 Hz or at a constant voltage. A CdTe:In crystal in the same condition requires a much greater V than $V_\pi$ to achieve the desired electro-optic effect. Further, to achieve good switch performance using a CdTe:In crystal, the optical power must be kept within a limited range compared with a $Cd_{0.9}Zn_{0.1}Te$ crystal.

Based on the above mentioned absorption measurements at a wavelength of 1064 nm for samples $A_1$ and $A_2$, that show relatively low absorption values, Applicant has determined that $Cd_xZn_{1-x}Te$ can efficiently switch optical signals down to a wavelength of about 1000 nm. An operation window from about 1000 nm to about 1650 nm is thus possible for the invention switch. This includes the "second window" of optical communications at wavelengths between about 1300 and 1350 nm.

## Example 2

Applicant formed a 2x2 switch 1100 as shown in FIG. 11. The $Cd_{0.9}Zn_{0.1}Te$ sample $A_1$ described above and the components of the switches in FIGS. 10 and 11 were used to make this switch. The polarization beam splitters employed for the switch had a polarization insensitivity of about -30 dB.

In order to determine the cross-talk occurring in the switch 1100 of FIG. 11, Applicant determined the extinction ratio of the switch for several values of the optical signal wavelength. An optical signal was supplied to an output fiber 1002 of switch 1100. An optical power measuring device was placed in the region of output optical fiber 1024. Switch 1100 was then operated in cross connection with fiber 1002 connected to fiber 1026 while the voltage V = $V_\pi$ was applied to the electrodes of crystal element 1106. The optical power at the output of switch 1100 corresponding to non-connected output fiber 1024 was measured. The extinction ratio was determined by calculating the ratio of the optical power $P_{in}$ entering switch 1100 to the power $P_{out}$ emerging from the non-connected output. The switch was operated at different wavelengths varying from 1520 nm to 1570 nm. The worst extinction ratio was about -27dB for an applied voltage of V = $V_\pi$. When no voltage was applied, an extinction ratio of about -30dB was achieved.

Another experimental test was performed to determine the sensitivity of switch 1100 to the state of polarization of the input optical signal and to determine the variation in the power $P_{out}$ as the state of polarization of the input optical signal was varied. The experimental conditions remained the same except that a quarter-wave plate and a half-wave plate were positioned at the output of input optical fiber 1002 to vary the state of polarization of the optical signal coming from the input optical fiber 1002. By suitably rotating these plates, it was possible to obtain all possible states of polarization. A quarter-wave plate and a half-wave plate manufactured by BERNARD HALLE (Germany) were used in this experiment.

The experiment was initially performed without crystal element 1106 and was subsequently performed in the presence of crystal element 1106 while a voltage V = $V_\pi$ was applied to its electrodes in the cross state. The optical power $P_{out}$ emerging from switch 1100 via two optical fibers 1024 and 1026 was measured. The variations in the output power were minimal when the state of polarization of the input optical signal was varied. In fact, the maximum variation in the power $P_{out}$ was equal to about 1/1000, i.e., -30 dB.

Applicant believes that since the same variations in power $P_{out}$ from the device were recorded in the absence and in the presence of crystal element 1106, those variations cannot be attributed to the crystal. Therefore, the variations must be attributed to other elements of switch 1100, e.g. the PBS or the right angle prism. Polarization beam splitters integrated, as an example, on a niobate substrate are less sensitive to polarization. Further modifications of the described embodiments may be performed to improve the packaging process and to minimize any attenuation or cross-talk.

In addition, the response time of device 1100 was determined. A variable voltage V of about 1000 V at a frequency of 1 kHz was applied to switch 1100. The optical power $P_{out}$ was measured at one output optical fiber, e.g. output fiber 1024. For this test, achieving complete polarization rotation was not necessary. Since an oscillating voltage was applied, the optical output power showed the same oscillating behavior. By comparing the voltage oscillating traces to the output oscillation, Applicant determined that the response time was less than one millisecond. This experimental result shows that $Cd_{0.9}Zn_{0.1}Te$ is a suitable crystal to use in the electro-optical switches according to the invention.

Such electro-optical switches have the following advantages:

- same performance at high switching frequency and at low switching frequency;
- no change in performance for operation in a fixed state;

- lower actual half-wave voltage;
- higher optical signal power allowed; and
- substantially constant performance in the third window.

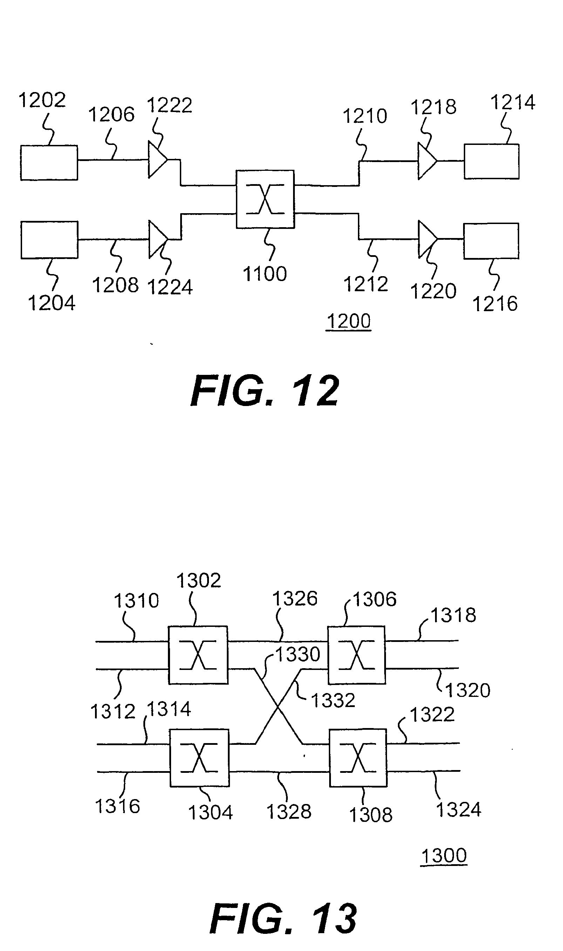

Switches 1000 and 1100, which rely on the electro-optic effect of $Cd_xZn_{1-x}Te$ crystals 1014 and 1106, constitute the elementary building blocks for complex switching nodes necessary for optical communication systems. As an example, FIG. 12 shows a wavelength division multiplexing (WDM) optical system 1200 having a polarization-insensitive electro-optical switch 1100. Transmitters 1202 and 1204 provide optical signals to switch 1100 in FIG. 12 by means of respective optical fibers 1206 and 1208. The output ports of electro-optical switch 1100 are connected by means of respective optical fibers 1210 and 1212 to receiving stations 1214 and 1216.

Transmitter stations 1202 and 1204 comprise respectively one or more optical sources, preferably laser sources, capable of generating optical signals. In one embodiment, the optical signals are directly generated at predetermined wavelengths. In another embodiment, the optical signals are generated at different wavelengths, detected and converted into electrical signals, and then emitted at the predetermined wavelengths by modulation of the suitable laser sources. U.S. Patent No. 5,267,073 describes an exemplary device capable of making this wavelength conversion. For instances of WDM transmission, transmitter stations 1202 and 1204 each include a conventional multiplexer for sending the generated optical signals to fiber 1206 and fiber 1208, respectively. Generally, multiplexers are passive optical devices comprising fused fibers coupler, or planar and micro-optic devices.

Receiving stations 1214 and 1216 may detect and process the optical information traveling through system 1200 on individual wavelength channels. Each station represented by 1214 and 1216 may in a WDM configuration include a demultiplexer for separating a combination of WDM channels onto discrete paths. These paths from the demultiplexer are then connected to corresponding receiving devices.

In addition, preamplifiers 1218 and 1220 may boost the optical signals provided from crystal 1100 before the respective receiving stations 1214 and 1216. Similarly, amplifiers 1222 and 1224 serve to boost the optical signals provided from transmitting stations 1202 and 1204 in a known manner. Line amplifiers (not shown) may be adopted along one or more of optical fibers 1206, 1208, 1210, 1212 to offset attenuation in the optical paths. Preamplifiers 1218 and 1220, amplifiers 1206 and 1208 and line amplifiers may be conventional fiber optic amplifiers, e.g., erbium doped fiber amplifiers.

Switch 1100 exhibits cross/bar functionality by means of electrical control. When electro-optical switch 1100 is in the bar state, optical signals transmitted by transmitter station 1202 are sent through optical fiber 1206 and switched to optical fiber 1210, thus reaching receiving station 1214. Analogously, optical signals transmitted by transmitter station 1204 are switched to optical fiber 1212, and thus reach receiving station 1216. When electro-optical switch 1100 is in the cross state, optical signals emitted from transmitter station 1202 (or 1204) are switched to the opposite output fibers 1212 (or 1210) and then to receiving station 1216 (or 1214). In this way, electro-optical switches 1000 and 1100 perform space routing or interruption between input and output ports, rather than wavelength routing or demultiplexing. It is understood that transmitter stations 1202 and 1204 and/or receiving stations 1214 and 1216 can be substituted with more complicated telecommunications switching devices, such as network nodes, where optical signals are entering and exiting en route through a large system.

One of ordinary skill in the art could make NxM switches having N input ports and M output ports comprising a cascade of elementary 2x2 switches according to the arrangement of switches 1000 and 1100. For example, FIG. 13 depicts a 4x4 electro-optical switch 1300 comprising four 2x2 electro-optical switches 1302, 1304, 1306, and 1308 of the type 1100 having input fibers 1310, 1312, 1314, and 1316 and output fibers 1318, 1320, 1322, and 1324. Optical fibers 1326 and 1328 connect respectively electro-optical switches 1302 and 1306 and electro-optical switches 1304 and 1308. Optical fibers 1330 and 1332 respectively connect electro-optical switches 1302 and 1308 and electro-optical switches 1304 and 1306. By suitably fixing the state of the electro-optical switches, the connections shown in FIG. 13 allow an optical signal to be routed from one input fiber to any predetermined output port.

An NxM switch represents one key element to creating a useful circuit switching optical cross-connect (OXC) for interchanging wavelengths. In this case, a demultiplexing of the WDM channels at different wavelengths coming from the same input fiber and addressed to different output fibers are achieved. Various OXC structures are readily known in the art.

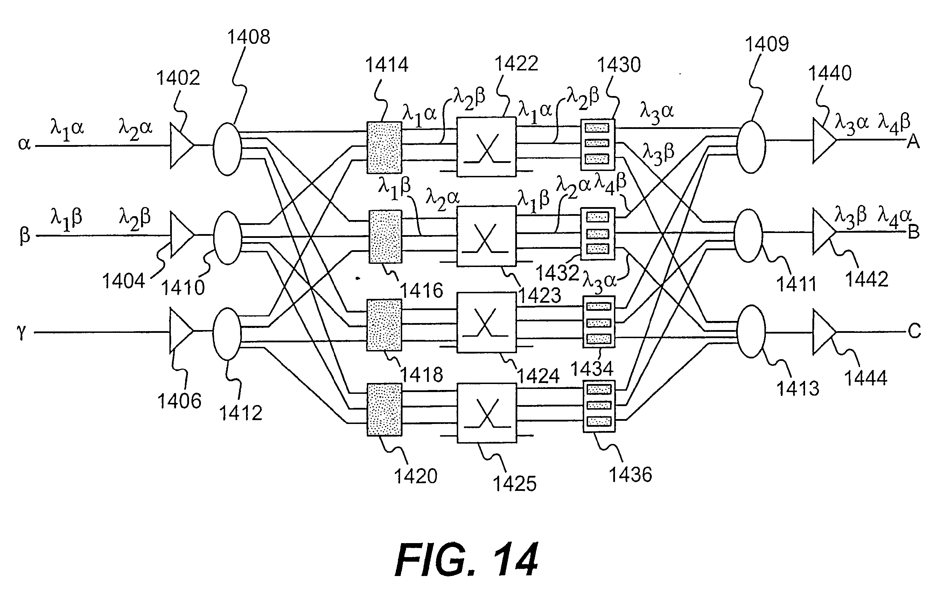

A particular scheme of a wavelength-interchange cross-connect 1400 is shown in FIG. 14. Wavelength-interchange cross-connect 1400 comprises input optical fibers $\alpha$, $\beta$, and $\gamma$ and output optical fibers A, B, and C. Input fibers $\alpha$, $\beta$, and $\gamma$ are respectively connected to optical amplifiers 1402, 1404, and 1406, followed by three beam splitters 1408, 1410, and 1412. Each beam splitter has four output optical fibers connected to four input ports of four filtering units 1414, 1416, 1418, and 1420, each comprising four tunable filters. The tunable filters of the filtering units are capable of transmitting an optical signal having a predetermined wavelength and blocking the signals having different wavelengths.

The three optical fibers exiting each filtering unit are connected to four 4x4 electro-optical switches 1422-1425, each formed by the cascading of four 2x2 switches employing $Cd_xZn_{1-x}Te$ crystals. Three output fibers of each 4x4 electro-optical switch 1422-1425 are connected as shown in FIG. 14 to four wavelength converting units 1430, 1432, 1434, and 1436 comprising four wavelength converters. One input fiber and one output fiber of each electro-optical switch 1422-1425 is not utilized for any optical connections. The wavelength converting units are connected to three beam combiners 1409, 1411, and 1413 that are each connected by an optical amplifier 1440, 1442, and 1444 to output fibers A, B, and C. Beam splitters 1408, 1410, and 1412 and beam combiners 1409, 1411, and 1413 are conventional devices, e.g. fused fibers couplers.

Filtering units 1414, 1416, 1418, and 1420 include tunable filters, e.g., electronically tunable Fabry-Perot filters (DMF series) manufactured by Queensgate (UK) that are useful for channel selection in 100 GHz spaced WDM systems. Wavelength converting units 1430, 1432, and 1436 may include wavelength converters WCM made by the Applicant, i.e. opto-electronic devices that operate an optical-to-electrical conversion and then an electronic-to-optical reconversion but on a different output wavelength.

The operation of the OXC 1400 will be clear from the following description.

Two optical signals $\lambda_{1\alpha}$ and $\lambda_{2\alpha}$ having respective wavelengths $\lambda_1$ and $\lambda_2$ enter input fiber $\alpha$, and two optical signals $\lambda_{1\beta}$ and $\lambda_{2\beta}$ having respective wavelengths $\lambda_1$ and $\lambda_2$ are inserted from input fiber $\beta$. In this particular example, optical signals $\lambda_{1\alpha}$ and $\lambda_{1\beta}$ have the same wavelength $\lambda_1$ and optical signals $\lambda_{2\alpha}$ and $\lambda_{2\beta}$ have the same wavelength $\lambda_2$. The optical signals $\lambda_{1\alpha}$ and $\lambda_{2\alpha}$ and the optical signals $\lambda_{1\beta}$ and $\lambda_{2\beta}$ are split in intensity by means of splitters 1408 and 1410 and are sent to the tunable filters included in filtering units 1414, 1416, 1418, and 1420.

The tunable filters of filtering unit 1414 connected to splitters 1408 and 1410 select the optical signals $\lambda_{1\alpha}$ and $\lambda_{2\beta}$. The optical signals $\lambda_{1\alpha}$ and $\lambda_{2\beta}$ are then sent to 4x4 electro-optical switch 1422. Because 4x4 electro-optical switch 1422 is in the bar state, the signals $\lambda_1\alpha$ and $\lambda_2\beta$ are routed to corresponding output fibers and sent to wavelength converting unit 1430, as shown in FIG. 14. The signals $\lambda_1\alpha$ and $\lambda_2\beta$ having wavelengths $\lambda_1$ and $\lambda_2$ are converted into signals $\lambda_3\alpha$ and $\lambda_3\beta$ having wavelength $\lambda_3$ by wavelength converter unit 1430. The optical signal $\lambda_3\alpha$ corresponding to the input signal $\lambda_1\alpha$ is sent through combiner 1409 to output fiber A while the optical signal $\lambda_3\beta$ corresponding to the input signal $\lambda_2\beta$ is sent through combiner 147 to output fiber B.

In contrast, the tunable filters of filtering unit 1416 connected to splitters 1408 and 1410 select the optical signals $\lambda_{2\alpha}$ and $\lambda_{1\beta}$. The optical signals $\lambda_{2\alpha}$ and $\lambda_{1\beta}$ are sent to the 4x4 electro-optical switch 1423, which is in the cross state. Thus, the signals $\lambda_2\alpha$ and $\lambda_1\beta$ undergo a cross routing and are sent to wavelength converting unit 1432, as shown in FIG. 14. The signals $\lambda_2\alpha$ and $\lambda_1\beta$ having wavelengths $\lambda_2$ and $\lambda_1$ are converted into signal $\lambda_4\alpha$ and $\lambda_4\beta$ having wavelength $\lambda_4$ by wavelength converting unit 1432. The optical signal $\lambda_4\alpha$ corresponding to the input signal $\lambda_2\alpha$ is sent through combiner 1411 to output fiber B, and the optical signal $\lambda_4\beta$ corresponding to the input signal $\lambda_1\beta$ is sent through combiner 1409 to output fiber A.

Wavelength conversion units 1430, 1432, 1434, and 1436 has been employed to overcome potential problems due to signal channels entering OXC 1400 at the same wavelengths from different inputs that have to be sent to the same output. As an example, signals $\lambda_3\alpha$ and $\lambda_4\beta$ corresponding to signals $\lambda_1\alpha$ and $\lambda_1\beta$ coming from different input fibers but having equal wavelengths $\lambda_1$ have been routed to output fiber A. Problems are avoided by changing the wavelength of the output channels, and every permutation is permitted.

It will be apparent to those skilled in the art that various modifications and variations can be made to the system and method of the present invention without departing from the scope of the invention. The present invention covers the modifications and variations of this invention provided they come within the scope of the appended claims and their equivalents.

**Claims**

1.  An electrically controlled optical switch apparatus comprising:

    a source for generating an optical beam with a wavelength in a range of 1000 to 1650 nm;
    a switching control unit for providing a switching voltage selected among a set of predetermined voltages associated to corresponding switching configurations;
    a $Cd_x Zn_{1-x}Te$ crystal having an input end for receiving said optical beam and an output end, wherein x is between about 0.7 and 0.99, the crystal exhibiting electric field induced birefringence such that the switch assumes one of said switching configurations upon application of a corresponding voltage in said set; and
    input and output directing devices positioned proximate respective input and output ends of the crystal for directing the optical beam.

2.  The electrically controlled optical switch of claim 1, wherein the crystal rotates the plane of polarization of the optical beam 90° when the switching voltage is equal to the half-wave voltage $V_\pi$.

3. The electrically controlled optical switch of claim 1, wherein the crystal has a length ranging from 10 to 15 mm.

4. The electrically controlled optical switch of claim 1, wherein the crystal has a thickness that is between about 200 $\mu$m and 2 mm.

5. The electrically controlled optical switch of claim 1, wherein the switch is capable of operating at a switching frequency that is less than 100 Hz.

6. The electrically controlled optical switch of claim 1, wherein the crystal is substantially parallelepiped shaped and is arranged in the AM-cut configuration.

7. The electrically controlled optical switch of claim 1, further comprising first and second input optical fibers optically coupled to the input directing device, and first and second output optical fibers optically coupled to the output directing device.

8. The electrically controlled optical switch of claim 7, wherein the input directing device comprises an input polarization beam splitter (PBS) and an input reflector, the input reflector being oriented to reflect an optical beam from the first input fiber to the input PBS, and the input PBS being oriented to direct an optical beam from the input reflector or from the second input fiber to an optical path along the crystal.

9. The electrically controlled optical switch of claim 8, wherein the output directing device comprises an output PBS and an output reflector, the output PBS being oriented to direct an optical beam from the optical path along the crystal to the second output fiber or to the output reflector, the output reflector being oriented to direct an optical beam from the output PBS to the first output fiber.

10. The electrically controlled optical switch of claim 7, wherein the input directing device comprises an input PBS and first and second input reflectors, the input PBS being oriented to separate an optical beam coming from the first input fiber or the second input reflector into a first beam directed toward the first input reflector and a second beam directed toward a first optical path along the crystal.

11. The electrically controlled optical switch of claim 10, wherein the first input reflector is oriented to reflect an optical beam from the input PBS to a second optical path along the crystal, the first optical path being substantially parallel to the second optical path.

12. The electrically controlled optical switch of claim 11, wherein the second input reflector is oriented to reflect an optical beam from the second input fiber to the input PBS.

13. The electrically controlled optical switch of claim 12, wherein the output directing device comprises an output PBS and first and second output reflectors, the output PBS being oriented to direct an optical beam from the second optical path to the second output fiber or to the first output reflector, and the output PBS being oriented to direct an optical beam from the second output reflector to the first output reflector or the second output fiber.

14. The electrically controlled optical switch of claim 13, wherein the first output reflector is oriented to reflect an optical beam from output PBS to the first output fiber.

15. The electrically controlled optical switch of claim 14, wherein the second output reflector is oriented to reflect an optical beam from the first optical path to the output PBS.

16. An optical communication system comprising:

first and second input transmitter stations comprising optical sources for generating optical signals with a wavelength in a range of 1000 to 1650 nm and multiplexers for sending the generated optical signals;
an electrically controlled optical switch connected to the first and second transmitter stations by respective first and second input optical fibers; and
first and second receiving stations being connected to the optical switch by respective first and second output optical fibers,

wherein the switch comprises:

a $Cd_x Zn_{1-x}Te$ crystal for receiving an optical beam, the crystal exhibiting electric field induced birefringence such that the switch changes from bar-state operation to cross-state operation when a sufficient voltage is applied to the crystal, wherein x is between about 0.7 and 0.99, and wherein the crystal comprises input and output ends; and

input and output directing devices positioned proximate respective input and output ends of the crystal for directing an optical beam.

17. The optical communication system of claim 16, further comprising first and second input optical amplifiers positioned between the respective first and second transmitter stations and the switch, the first and second input optical amplifiers being connected to the switch and the respective first and second transmitter stations by the respective first and second input optical fibers.

18. The optical communication system of claim 17, further comprising first and second output optical amplifiers positioned between the switch and the respective first and second receiving stations, the first and second output optical amplifiers being connected to the switch and the respective first and second receiving stations by the respective first and second output optical fibers.

19. The optical communication system of claim 16, wherein the switch is capable of operating at a switching frequency that is less than 100 Hz.

20. Method for switching an optical signal having a wavelength in the range of 1000 to 1650 nm, comprising;

inputting the optical signal into a $Cd_x Zn_{1-x}Te$ crystal, wherein x is between about 0.7 and 0.99, applying to the crystal a control voltage selected in a set of predetermined voltages.

**Patentansprüche**

1. Ein elektrisch gesteuerte optische Schaltvorrichtung, umfassend:

eine Quelle zum Erzeugen eines optischen Strahls mit einer Wellenlänge im Bereich von 1000 bis 1650 nm; eine Schaltsteuereinheit zum Bereitstellen einer Schaltspannung, die unter einem Satz von vorbestimmten Spannungen, die zu entsprechenden Schaltkonfigurationen gehören, ausgewählt wird; ein $Cd_xZn_{1-x}Te$ Kristall, der ein Eingangsende zum Empfangen des optischen Strahls und ein Ausgangsende aufweist, wobei x zwischen 0,7 und 0,99 ist, wobei der Kristall ein durch ein elektrisches Feld induzierte Doppelbrechung aufweist, so dass der Schalter eine der Schaltkonfigurationen bei Anwendung einer entsprechenden Spannung in dem Satz annimmt; und Eingangs- und Ausgangs-Umlenkvorrichtungen, die nahe liegend zu den Eingangs- und Ausgangsenden des Kristalls zum Umlenken des optischen Strahls positioniert sind.

2. Der elektrisch gesteuerte optische Schalter nach Anspruch 1, wobei der Kristall die Ebene der Polarisation des optischen Strahls um 90° dreht, wenn die Schaltspannung identisch mit der Halbwellenspannung $V_\pi$ ist.

3. Der elektrisch gesteuerte optische Schalter nach Anspruch 1, wobei der Kristall eine Länge in dem Bereich von 10 bis 15 mm aufweist.

4. Der elektrisch gesteuerte optische Schalter nach Anspruch 1, wobei der Kristall eine Dicke zwischen etwa 200 $\mu$m und 2 mm aufweist.

5. Der elektrisch gesteuerte optische Schalter nach Anspruch 1, wobei der Schalter in der Lage ist, mit einer Schaltfrequenz zu arbeiten, die niedriger als 100 Hz ist.

6. Der elektrisch gesteuerte optische Schalter nach Anspruch 1, wobei der Kristall im wesentlichen parallelepiped geformt ist und in einer AM-Schnitt Konfiguration angeordnet ist.

7. Der elektrisch gesteuerte optische Schalter nach Anspruch 1, ferner umfassend erste und zweite optische Eingangsfasern, die optisch mit der Eingangsumlenkvorrichtung gekoppelt sind, und erste und zweite optische Ausgangsfasern, die optisch mit der Ausgangsumlenkvorrichtung gekoppelt sind.

8. Der elektrisch gesteuerte optische Schalter nach Anspruch 7, wobei die Eingangsumlenkvorrichtung einen Eingangs-polarisierenden-Strahlteiler (PBS) und einen Eingangsreflektor umfasst, wobei der Eingangsreflektor orientiert ist, um einen optischen Strahl aus der ersten optischen Eingangsfaser zu dem PBS zu reflektieren, und wobei der PBS orientiert ist, um einen optischen Strahl von dem Eingangsreflektor oder von der zweiten optischen Faser zu einem optischen Pfad entlang des Kristalls umzulenken.

9. Der elektrisch gesteuerte optische Schalter nach Anspruch 8, wobei die Ausgangsumlenkvorrichtung einen Ausgangs-PBS und einen Ausgangsreflektor umfasst, wobei der Ausgangs-PBS orientiert ist, um einen optischen Strahl von dem optischen Pfad entlang des Kristalls zu der zweiten Ausgangsfaser oder zu dem Ausgangsreflektor umzulenken, wobei der Ausgangsreflektor orientiert ist, um einen optischen Strahl von dem Ausgangs-PBS zu der ersten Ausgangsfaser umzulenken.

10. Der elektrisch gesteuerte optische Schalter nach Anspruch 7, wobei die Eingangsumlenkvorrichtung einen Eingangs-PBS und ersten und zweiten Eingangsreflektor umfasst, wobei der Eingangs-PBS orientiert ist, um einen optischen Strahl, der von der ersten optischen Faser oder dem zweiten Eingangsreflektor kommt, in einen ersten Strahl, der zum ersten Eingangsreflektor und einen zweiten Strahl, der zu einem ersten optischen Pfad entlang des Kristalls umgelenkt wurde, zu trennen.

11. Der elektrisch gesteuerte optische Schalter nach Anspruch 10, wobei der erste Eingangsreflektor orientiert ist, um einen optischen Strahl von dem Eingangs-PBS zu einem optischen Pfad entlang des Kristalls zu reflektieren, wobei der erste optische Pfad im wesentlichen parallel.zu dem zweiten optischen Pfad ist.

12. Der elektrisch gesteuerte optische Schalter nach Anspruch 12, wobei der zweite Eingangsreflektor orientiert ist, um einen optischen Strahl von der zweiten Eingangsfaser zu dem Eingangs-PBS zu reflektieren.

13. Der elektrisch gesteuerte optische Schalter nach Anspruch 12, wobei die Ausgangsumlenkvorrichtung einen Ausgangs-PBS und ersten und zweiten Ausgangsreflektor umfasst, wobei der Ausgangs-PBS orientiert ist, um einen optischen Strahl von dem zweiten optischen Pfad zu der zweiten optischen Faser oder zu dem ersten Ausgangsreflektor umzulenken, und wobei der Ausgangs-PBS orientiert ist, um einen optischen Strahl von dem zweiten Ausgangsreflektor zu dem ersten Ausgangsreflektor oder der zweiten Ausgangsfaser umzulenken.

14. Der elektrisch gesteuerte optische Schalter nach Anspruch 13, wobei der erste Ausgangsreflektor orientiert ist, um einen optischen Strahl von dem Ausgangs-PBS zu der ersten Ausgangsfaser zu reflektieren.

15. Der elektrisch gesteuerte optische Schalter nach Anspruch 14, wobei der zweite Ausgangsreflektor orientiert ist, um einen optischen Strahl von der ersten optischen Pfad zu dem Ausgangs-PBS zu reflektieren.

16. Ein optisches Kommunikationssystem, umfassend:

erste und zweite Eingangsübertragungsstationen, die optische Quellen zum Erzeugen von optischen Signalen mit einer Wellenlänge in einem Bereich von 1000 bis 1650 nm und Multiplexer zum Senden der erzeugten optischen Signale umfassen;
einen elektrisch gesteuerter optischen Schalter, der mit der ersten und zweiten Übertragungsstation durch entsprechende erste und zweite optische Fasern verbunden ist; und
erste und zweite Empfangsstationen, die mit dem optischen Schalter durch entsprechende erste und zweite optische Ausgangsfasern verbunden sind,

wobei der Schalter umfasst:

einen $Cd_xZn_{1-x}Te$ Kristall zum Empfangen eines optischen Strahls, wobei der Kristall durch ein elektrisches Feld induzierte Doppelbrechung aufweist, so dass der Schalter vom Strich-Zustand Betrieb zu Kreuz-Zustand Betrieb wechselt, wenn eine ausreichende Spannung an den Kristall angelegt wird, wobei x zwischen etwa 0,7 und 0,99 ist, und wobei der Kristall Eingangs- und Ausgangsenden aufweist; und
Eingangs- und Ausgangs- Umlenkvorrichtungen, die nächst zu dem Eingangs- und Ausgangsenden des Kristalls zum Umlenken des optischen Strahls positioniert sind.

17. Das optische Kommunikationssystem nach Anspruch 16, ferner umfassend ersten und zweiten optischen Eingangsverstärker, die zwischen den entsprechenden ersten und zweiten Übertragungsstationen und dem Schalter positioniert sind, wobei der erste und zweite optische Eingangsverstärker mit dem Schalter und den entsprechenden Übertragungsstationen durch entsprechende erste und zweite optische Eingangsfasern verbunden sind.

18. Das optische Kommunikationssystem nach Anspruch 17, ferner umfassend ersten und zweiten optischen Ausgangsverstärker, die zwischen dem Schalter und den entsprechenden ersten und zweiten Übertragungsstationen positioniert sind, wobei der erste und zweite optische Ausgangsverstärker mit dem Schalter und den entsprechenden Übertragungsstationen durch entsprechende erste und zweite optische Eingangsfasern verbunden sind.

19. Das optische Kommunikationssystem nach Anspruch 16,
wobei der Schalter in der Lage ist, mit einer Schaltfrequenz zu arbeiten, die niedriger als 100 Hz ist.

20. Verfahren zum Schalten eines optischen Signals, das eine Wellenlänge in dem Bereich von 1000 bis 1650 nm aufweist, umfassend:

Eingeben des optischen Signals in einen $Cd_xZn_{1-x}Te$ Kristall, wobei x zwischen 0,7 und 0,99 ist,
Anlegen einen Steuerungsspannung an den Kristall, die aus einem Satz von vorbestimmten Spannungen ausgewählt wird.

**Revendications**

1. Dispositif de commutation optique à commande électrique comprenant :

une source pour produire un faisceau optique ayant une longueur d'onde comprise entre 1000 et 1650 nm ;
une unité de commande de commutation destinée à fournir une tension de commutation choisie parmi un ensemble de tensions prédéterminées associées à des configurations de commutation correspondantes ;
un cristal de $Cd_xZn_{1-x}$ Te comportant une extrémité d'entrée destinée à recevoir ledit faisceau optique et une extrémité de sortie, où x vaut de 0,7 environ à 0,99, le cristal présentant une biréfringence induite par un champ électrique telle que le dispositif de commutation prend l'une desdites configurations de commutation lors de l'application d'une tension correspondante dans ledit ensemble ; et
des dispositifs d'orientation d'entrée et de sortie positionnés à proximité des extrémités respectives d'entrée et de sortie du cristal pour orienter le faisceau optique.

2. Dispositif de commutation optique à commande électrique selon la revendication 1, dans lequel le cristal fait tourner le plan de polarisation du faisceau optique de 90° lorsque la tension de commutation est égale à la tension de demi-onde $V_\pi$.

3. Dispositif de commutation optique à commande électrique selon la revendication 1, dans lequel le cristal a une longueur de 10 à 15 mm.

4. Dispositif de commutation optique à commande électrique selon la revendication 1, dans lequel le cristal a une épaisseur qui est comprise entre environ 200 $\mu$m et 2 mm.

5. Dispositif de commutation optique à commande électrique selon la revendication 1, dans lequel le dispositif de commutation est apte à fonctionner à une fréquence de commutation qui est inférieure à 100 Hz.

6. Dispositif de commutation optique à commande électrique selon la revendication 1, dans lequel le cristal est de forme substantiellement parallélépipédique et est agencé dans la configuration de coupe AM.

7. Dispositif de commutation optique à commande électrique selon la revendication 1, comprenant en outre des première et deuxième fibres optiques d'entrée couplées optiquement au dispositif d'orientation d'entrée, et des première et deuxième fibres optiques de sortie couplées optiquement au dispositif d'orientation de sortie.

8. Dispositif de commutation optique à commande électrique selon la revendication 7, dans lequel le dispositif d'orientation d'entrée comprend un séparateur de faisceau de polarisation (PBS) d'entrée et un réflecteur d'entrée, le réflecteur d'entrée étant orienté de manière à réfléchir un faisceau optique de la première fibre d'entrée vers le PBS d'entrée, et le PBS d'entrée étant orienté de manière à diriger un faisceau optique du réflecteur d'entrée ou de la deuxième fibre d'entrée vers un chemin optique le long du cristal.

**EP 1 285 309 B1**

9. Dispositif de commutation optique à commande électrique selon la revendication 8, dans lequel le dispositif d'orientation de sortie comprend un PBS de sortie et un réflecteur de sortie, le PBS de sortie étant orienté de manière à diriger un faisceau optique du chemin optique le long du cristal vers la deuxième fibre de sortie ou vers le réflecteur de sortie, le réflecteur de sortie étant orienté de manière à diriger un faisceau optique du PBS de sortie vers la première fibre de sortie.

10. Dispositif de commutation optique à commande électrique selon la revendication 7, dans lequel le dispositif d'orientation d'entrée comprend un PBS d'entrée et des premier et deuxième réflecteurs d'entrée, le PBS d'entrée étant orienté de manière à séparer un faisceau optique provenant de la première fibre d'entrée ou du deuxième réflecteur d'entrée en un premier faisceau dirigé vers le premier réflecteur d'entrée et un deuxième faisceau dirigé vers un premier chemin optique le long du cristal.

11. Dispositif de commutation optique à commande électrique selon la revendication 10, dans lequel le premier réflecteur d'entrée est orienté de manière à réfléchir un faisceau optique du PBS d'entrée vers un deuxième chemin optique le long du cristal, le premier chemin optique étant substantiellement parallèle au deuxième chemin optique.

12. Dispositif de commutation optique à commande électrique selon la revendication 11, dans lequel le deuxième réflecteur d'entrée est orienté de manière à réfléchir un faisceau optique de la deuxième fibre d'entrée vers le PBS d'entrée.

13. Dispositif de commutation optique à commande électrique selon la revendication 12, dans lequel le dispositif d'orientation de sortie comprend un PBS de sortie et des premier et deuxième réflecteurs de sortie, le PBS de sortie étant orienté de manière à diriger un faisceau optique du deuxième chemin optique vers la deuxième fibre de sortie ou vers le premier réflecteur de sortie, et le PBS de sortie étant orienté de manière à diriger un faisceau optique du deuxième réflecteur de sortie vers le premier réflecteur de sortie ou vers la deuxième fibre de sortie.

14. Dispositif de commutation optique à commande électrique selon la revendication 13, dans lequel le premier réflecteur de sortie est orienté de manière à réfléchir un faisceau optique du PBS de sortie vers la première fibre de sortie.

15. Dispositif de commutation optique à commande électrique selon la revendication 14, dans lequel le deuxième réflecteur de sortie est orienté de manière à réfléchir un faisceau optique du premier chemin optique vers le PBS de sortie.

16. Système de communication optique comprenant :

   des première et deuxième stations émettrices comprenant des sources optiques pour générer des signaux optiques ayant une longueur d'onde comprise dans un intervalle de 1000 à 1650 nm et des multiplexeurs pour envoyer les signaux optiques produits ;
   un dispositif de commutation optique à commande électrique connecté aux première et deuxième stations émettrices par des première et deuxième fibres optiques d'entrée respectives ; et
   des première et deuxième stations de réception connectées au dispositif de commutation optique par des première et deuxième fibres optiques de sortie respectives,

   dans lequel le dispositif de commutation comprend :

   un cristal de $Cd_xZn_{1-x}Te$ destiné à recevoir un faisceau optique, le cristal présentant une biréfringence induite par un champ électrique telle que le dispositif de commutation passe d'un fonctionnement en état de barre à un fonctionnement en état de croix lorsqu'une tension suffisante est appliquée au cristal, où x vaut de 0,7 environ à 0,99, et où le cristal comprend des extrémités d'entrée et de sortie ; et
   des dispositifs d'orientation d'entrée et de sortie positionnés à proximité des extrémités respectives d'entrée et de sortie du cristal pour orienter un faisceau optique.

17. Système de communication optique selon la revendication 16, comprenant en outre des premier et deuxième amplificateurs optiques d'entrée positionnés entre les première et deuxième stations émettrices respectives et le dispositif de commutation, les premier et deuxième amplificateurs optiques d'entrée étant connectés au dispositif de commutation et aux première et deuxième stations émettrices respectives par les première et deuxième fibres optiques d'entrée respectives.

**20**

**18.** Système de communication optique selon la revendication 17, comprenant en outre des premier et deuxième amplificateurs optiques de sortie positionnés entre le dispositif de commutation et les première et deuxième stations de réception respectives, les premier et deuxième amplificateurs optiques de sortie étant connectés au dispositif de commutation et aux première et deuxième stations de réception respectives par les première et deuxième fibres optiques de sortie respectives.

**19.** Système de communication optique selon la revendication 16, dans lequel le dispositif de commutation est apte à fonctionner à une fréquence de commutation qui est inférieure à 100 Hz.

**20.** Procédé de commutation d'un signal optique ayant une longueur d'onde comprise entre 1000 et 1650 nm, comprenant :

l'entrée du signal optique dans un cristal de $Cd_xZn_{1-x}Te$, où x vaut de 0,7 environ à 0,99,
l'application au cristal d'une tension de commande choisie dans un ensemble de tensions prédéterminées.

**FIG. 1**

FIG. 2A

FIG. 2B(1)

FIG. 2B(2)

**FIG. 2C**

FIG. 3

FIG. 4

FIG. 5A

FIG. 5B

**FIG. 6**

**FIG. 7**

**FIG. 8**

$$I - \frac{I(V)}{I(V=0)}$$

p(mW)

# FIG. 9

FIG. 10

FIG. 11

## FIG. 12

## FIG. 13

FIG. 14

EP 1 285 309 B1